# EUROPÄISCHE PATENTSCHRIFT

(11) **EP 2 692 748 B1**
(45) Veröffentlichungstag und Bekanntmachung des Hinweises auf die Patenterteilung: **21.01.2015**
(21) Anmeldenummer: 12179264.2
(22) Anmeldetag: 03.08.2012
(51) Int. Cl.: C08F 20/24, C08L 33/06, C08L 33/16, C09D 109/08, D06M 15/277

(54) **Hydro- und oleophobe Polymerblends**
Hydrophobic and oleophobic polymer blends
Mélanges de polymères hydrophobes et oléophobes

(43) Veröffentlichungstag der Anmeldung: 05.02.2014
(73) Patentinhaber: PHILIPPS-UNIVERSITÄT MARBURG, 35037 Marburg (DE)
(72) Erfinder: Agarwal, Seema, 35039 Marburg (DE); Greiner, Andreas, 35287 Amöneburg (DE); Patton, Agnes, 35096 Weimar-Roth (DE)
(74) Vertreter: Stumpf, Peter

(56) Entgegenhaltungen:
- DE-A1- 10 231 643
- US-A1- 2005 143 541

## Beschreibung

Die vorliegende Erfindung betrifft die Gebiete Makromolekulare Chemie, Polymerchemie und Materialwissenschaften.

Hydrophobe und/oder oleophobe Oberflächen werden für eine Vielzahl von Anwendungen eingesetzt, beispielsweise, um Textilien oder Fassadenfronten mit wasserabweisenden Eigenschaften auszurüsten und/oder um die Haftung von beispielsweise Schmutzpartikeln, Lebensmitteln, Mikroorganismen, Farben, Tinten, Harzen oder Kunststoffen auf entsprechenden Oberflächen wirkungsvoll zu verhindern. Darüber hinaus sind hydrophobe Oberflächen auch bei Vorrichtungen zur Aufbewahrung und Handhabung von Flüssigkeiten, insbesondere von wässrigen Flüssigkeiten vorteilhaft, da dadurch eine restlose Entleerung der entsprechenden Vorrichtungen ermöglicht wird.

Ein physikalisches Maß für die Hydrophobie einer Festkörperoberfläche ist der Kontaktwinkel gegenüber Wasser: je größer der Kontaktwinkel, desto hydrophober die Oberfläche. Oberflächen mit einem Kontaktwinkel <90° werden als hydrophil, solche mit einem Kontaktwinkel >90° als hydrophob bezeichnet. Bei einem Kontaktwinkel von 0° bildet das Wasser auf der Festkörperoberfläche einen gleichmäßigen Film, d. h. es benetzt die Oberfläche vollständig, und auch bei starker Neigung der Oberfläche bleiben Reste des Wassers auf der Oberfläche haften. Ab einem Kontaktwinkel von 90 ° findet keine Benetzung mehr statt, das Wasser bildet einen fast kugelförmigen Tropfen, der bei Neigung der Oberfläche vollständig herunterläuft, ohne dass Reste zurück bleiben. Ab einem Kontaktwinkel von 160° spricht der Fachmann von einer superhydrophoben Oberfläche, die beispielsweise beim Lotus-Effekt einiger Pflanzen vorliegt. Im Extremfall, bei einem Kontaktwinkel von 180°, berührt der Wassertropfen die Festkörperoberfläche nur an einem Punkt.

Ein weiteres wichtiges Maß zur Charakterisierung hydrophober Oberflächen ist der Rollwinkel für Wasser. Dieser bezeichnet den Neigungswinkel einer Oberfläche, ab dem ein aufgebrachter Wassertropfen von der Oberfläche zu rollen beginnt. Je kleiner der Rollwinkel, desto hydrophober die Oberfläche bzw. desto weniger haftet ein Wassertropfen auf der Oberfläche.

Es ist bekannt, dass die mikroskopische Topographie einer Oberfläche wesentlichen Einfluss auf deren Hydrophilie/Hydrophobie hat. Raue Oberflächen beispielsweise weisen einen kleineren Rollwinkel und einen größeren Kontaktwinkel als glatte Oberflächen gleicher Zusammensetzung auf. Mikroskopisch betrachtet weisen alle Oberflächen Vertiefungen und Erhöhungen auf, die je nach Art der betrachteten Oberfläche unterschiedlich tief bzw. hoch sind.

Die Ursache für das Abperlen von Wassertropfen z. B. von Blättern der Lotus-Pflanze (Lotus-Effekt) liegt ebenfalls in der Mikrostruktur der Blattoberfläche. Die Epidermis, die oberste Gewebeschicht der Lotospflanze, bildet etwa 10 bis 20 Mikrometer hohe und 10 bis 15 Mikrometer voneinander entfernte Papillen, auf die Wachse aufgelagert sind. Diese Wachse sind hydrophob, so dass kein Wasser mehr in die Zwischenräume zwischen den Papillen gelangt. Ein Wassertropfen steht daher nur im Bereich der Papillenspitzen mit der Blattoberfläche in Kontakt, wodurch sich die Kontaktfläche zwischen Wasser und Oberfläche drastisch verringert, der Kontaktwinkel stark zunimmt und der Tropfen von der Oberfläche abperlt.

### Begriffsdefinitionen:

Ein **Polymer-Blend** ist definiert als "makroskopisch homogene Mischung von zwei oder mehr verschiedenen Polymeren" (IUPAC Compendium of Chemical Terminology 2^{nd} Edition, 1997).

Hergestellt werden Polymer-Blends meist durch intensive mechanische Vermischung der aufgeschmolzenen Polymere, z.B. in einem Extruder.

Die in dieser Patentanmeldung beschriebenen Polymerblends basieren jedoch auf wässrigen Dispersionen der zu mischenden Polymere. Wässrige Polymerdispersionen werden auch als Latex bezeichnet. Der Begriff Polymerblend in der vorliegenden Patentanmeldung meint daher zunächst **Latex-Blends.** Diese werden durch Mischen der wässrigen Polymer-Dispersionen hergestellt. Erst nach Trocknen der Latex-Blends, also nach dem Verdampfen des Lösungsmittels, entstehen feste Polymerblends. Dieser Prozess wird auch als **Verfilmung** des Latex-Blends bezeichnet. "Polymerblends in wässriger Dispersion" sind in dieser Anmeldung Latex-Blends. Der Begriff "blenden mit" meint "zu einem Blend mischen mit".

Als Bestandteil von Latex-Blends werden häufig Polyalkylacrylate oder Polyalkylmethacrylate verwendet. Die Schreibweise "Alkyl(meth)acrylat" meint hier entweder ein Alkylacrylat oder ein Alkylmethacrylat. Als "Fettacrylate" werden Alkylacrylate bezeichnet, die langkettige Alkylreste von Fettsäuren enthalten, beispielsweise Stearylacrylat.

### Stand der Technik

Für die hydrophobe Beschichtung von Oberflächen sind eine Vielzahl von Polymeren bekannt, die insbesondere fluorierte Komponenten enthalten. Für die wasser-, öl- und schmutzabweisende Ausrüstung von Textilien werden häufig Copolymere aus Acrylaten oder Methacrylaten und polyfluorierten Alkyl(meth)acrylaten eingesetzt. Vorteilhaft sind Polymere, die in wässriger Dispersion hergestellt und weiter verwendet werden können, da organische Lösungsmittel im Vergleich zu Wasser gesundheits- und umweltschädlich sind, teilweise separat entsorgt werden müssen und/oder die Gefahr der leichten Entflammbarkeit besteht.

US 3256230 **B** beispielsweise offenbart Polymerblends aus fluorierten Alkylacrylat-Polymeren und nichtfluorierten Polyacrylaten für die wasser- und ölabweisende Beschichtung von Textilien. Die Polymere werden durch Emulsionspolymerisation in wässriger Lösung synthetisiert. Zur Herstellung der Blends können die Polymerdispersionen direkt gemischt und anschließend auf zu beschichtende Substrate aufgetragen werden. Beschichtetes Baumwoll-Gewebe wird 45 Minuten bei Raumtemperatur und 2 bis 3 Minuten bei 175°C getrocknet. Die Wasser- und Ölabweisung des beschichteten Gewebes wird anhand des Hydrophobie-Spraytests nach DIN/EN 24920 bzw. der amerikanischen "AATCC Standard Test Method 22-1952" untersucht. Es werden Spraytestwerte von 100 entsprechend vollständigem Abperlen von Wasser, das für 25-30 Sekunden auf das Gewebe gesprüht wird, ab einem Anteil von etwa 15 Gewichts% Fluoracrylat im Polymerblend erreicht.

Dem Fachmann ist jedoch bekannt, dass hydrophobe Beschichtungen aus solchen Polymerblends nicht beständig gegenüber Waschen sind und bei längerem Kontakt mit Wasser ihre hydrophoben Eigenschaften verlieren. Auch um den mechanischen Ansprüchen an einen beschichteten Gebrauchsgegenstand bzw. ein Textil zu genügen, werden industriell für Beschichtungen verwendete Polymere daher vernetzt. In Übereinstimmung damit wird in der US 3256230 **B** der Zusatz von N-Methylol-acrylamid als Vernetzer zu einem der Bestandteile des Polymerblends als sehr vorteilhaft beschrieben, um eine dauerhaftere Ausrüstung der Textilien zu erreichen. Nachfolgende Patentanmeldungen beschreiben daher deutlich aufwändiger herzustellende Polymere, die meist komplexe Co-, Block- oder Pfropfpolymere sind und mehrfach funktionelle Monomere zur Vernetzung der Polymere untereinander oder Kopplung an die Faser enthalten, um eine bessere Haftung an Fasern zu gewährleisten.

US 4742140 B offenbart Copolymere zur hydrophoben und oleophoben Ausrüstung von Textilien, die aus 40-75 Gew.% perfluorierten Alkylacrylat-Monomeren mit unterschiedlichen Kettenlängen, 10-35 Gew.% Vinylchlorid und 10-25 Gew.% fluorfreiem Alkyl(meth)acrylat bestehen. Außerdem enthalten diese Copolymere weitere Monomere, die als Vernetzer zugesetzt werden, um eine möglichst dauerhafte Beschichtung zu erreichen. Die in wässriger Lösung hergestellten Copolymere werden auf Textilien aufgebracht und bei Raumtemperatur sowie für 30-180 Sekunden bei 140-190°C getrocknet.

Nachteilig an diesen Polymeren ist der relativ hohe Anteil an fluorhaltigem Monomer sowohl unter Kosten- als auch unter ökologischen Aspekten. Darüber hinaus nehmen die Hydrophobie-Spraytestwerte und auch die Ölabweisungswerte gemessen nach AATCC Standard-Testmethode 118 nach fünfmaligem Waschen bei 60°C teilweise deutlich ab, so dass keine waschfeste Ausrüstung von Textilien mit den beschriebenen Polymeren erreicht wird.

WO 96/05172 offenbart Polymere zur wasserabweisenden Beschichtung von Textilien oder Papier, die fluorhaltige Acrylat-Monomere enthalten, die zwischen der Carboxylgruppe des Acrylats und dem fluorierten Alkylrest eine Art Spacer aus Phenyl- und Urethangruppen enthalten. Copolymere aus diesen Monomeren und Laurylacrylat bilden auf Textilgewebe eine hydrophobe Oberfläche, die Kontaktwinkel gegenüber Wasser im Bereich von 110° bis 170° aufweist. Nach Waschen bei 40°C nehmen die Kontaktwinkel jedoch deutlich ab, was durch Trocknen bei hohen Temperaturen (60°C und 170°C) teilweise verhindert werden kann. Nachteilig ist bei diesen Polymeren neben den extra zu synthetisierenden Monomeren, dass sie zum Ausrüsten von Textilien in organischen Lösungsmitteln eingesetzt werden müssen.

WO 97/06127 offenbart Polymere aus fluorierten Alkylacrylaten mit 20 bis 24 C-Atomen in den Alkylresten, wobei auf zehn nichtfluorierte CH₂-Gruppen zehn oder mehr fluorhaltige CF₂-Gruppen folgen. Mit diesen Polymeren beschichtetes Nylon-Gewebe weist nur eine geringe Abnahme der Kontaktwinkel gegenüber Wasser nach Waschen für 64 Stunden bei Raumtemperatur oder für 2 Minuten bei bis zu 95°C auf. Eine dauerhafte Waschbeständigkeit bei 60°C ist damit nicht gegeben. Zur Beschichtung von Textilien müssen diese Polymere in Hexafluorxylol gelöst werden, was aus Umweltschutz- und gesundheitlichen Gründen extrem nachteilig ist. Darüber hinaus erfordern diese Polymere wie auch die in der WO 96/05172 beschriebenen eine aufwändige Synthese der Monomere und der daraus hergestellten Copolymere.

Ferner sind im Stand der Technik Polymerblends oder Copolymere zur wasser- und ölabweisenden Beschichtung von Oberflächen, insbesondere von Textilien, bekannt, die aus mehreren unterschiedlichen Monomer-Komponenten bestehen und/oder verschiedene zusätzliche funktionelle Gruppen im Monomer wie Sulfonsäuregruppen, Amide, Amine, ionische Gruppen, radikalische Gruppen, Urethangruppen, Isocyanatgruppen etc. enthalten (z. B. US 4215205 A, GB 1413051 A, EP 0682146 B1, EP 020782 B1, WO 2010/030046 A1).

Beispielsweise werden in der EP 0554667 B1 Polymerblends fluorhaltiger Copolymere beschrieben, die aus unterschiedlichen perfluorierten Alkyl(meth)acrylaten, ionischen hydrophilen Monomeren, nichtionischen hydrophilen Monomeren sowie weiteren Monomeren bestehen und zur wasser- und ölabweisenden Beschichtung von Textilien, Leder, Papier und mineralischen Substraten verwendet werden.

US 6624268 B1 offenbart Fluoracrylat-Copolymere, die neben einer Mischung aus Fluoracrylat-Monomeren unterschiedlicher Kettenlänge im Alkylrest mindestens zwei weitere Monomere wie z. B. Stearylacrylat, Cyclohexylmethacrylat, N-Methylolacrylamid und/oder Vinylchlorid enthalten. Diese Polymere werden als wässrige Dispersionen mit Cosolventien erhalten, die eine Viskosität größer als 3 cP besitzen. Mit diesen Polymerdispersionen beschichtetes Textilgewebe weist Rollwinkel für Wasser deutlich kleiner als 20° und Hydrophobie-Spraytestwerte von 100 auf, es werden aber keine Angaben zur Dauerhaftigkeit der Textilausrüstung nach Waschen gemacht.

US 2012/0097882 A1 offenbart wässrige Dispersionen von Copolymeren, die drei unterschiedliche Monomere als Komponenten enthalten: eine fluorierte organische Verbindung mit einer ungesättigten polymerisierbaren Gruppe, ein Olefin und ein (Meth-)Acrylat. Beschichtetes Nylongewebe weist eine hohe Wasserabweisung in einem Spraytest auf, die auch nach zwanzigmaligem Waschen nur wenig reduziert erhalten bleibt.

Nachteilig an allen diesen Polymerbeschichtungen ist der relativ hohe Fluorgehalt und die komplexe Zusammensetzung aus unterschiedlichen Monomeren und/oder Copolymeren, die eine aufwändige Qualitätskontrolle sowie auch eine aufwändige Herstellung erfordert.

Dem Fachmann ist weiterhin bekannt, dass Homo- oder Copolymere oder Blends aus Homo-oder Copolymeren von Alkyl(meth)acrylaten ohne eine polyfluorierte Komponente zwar zur Beschichtung von Oberflächen eingesetzt werden können, aber keine superhydrophoben Oberflächen bilden (Kontaktwinkel <160°). Die Rollwinkel von mit PolyAlkyl(meth)acrylaten beschichteten Oberflächen sind meist größer als 30°.

Poly(organo)siloxane, die auch als Silicone bezeichnet werden, sind an sich superhydrophobe Verbindungen, die sich aber aufgrund ihrer geringen thermomechanischen Belastbarkeit (z. B. beim Waschvorgang) nicht zur wasser- und ölabweisenden Beschichtung von Trägersubstanzen wie z. B. Textilien eignen.

EP 0207282 B1 offenbart eine wasser- und ölabweisende Polymerbeschichtung für verschiedene Trägersubstanzen, die (a) aus einem anorganischen Siloxan, einem Silicon-Silsesquioxan-Blockpolymer, einem Acrylpolymer oder Acrylat-Copolymer, einem EthylenVinylacetat-Latex oder einem Styrol-Butadien-Latex besteht, weiterhin (b) aus einem Aminoorganosilan und (c) aus einer perfluorierten Carbonsäure oder einem perfluorierten Carbonsäureester. Diese Blends werden in organischen Lösungsmitteln wie Toluol oder Methanol hergestellt und zur weiteren Verwendung eingesetzt, was wie auch die komplexe Zusammensetzung aus oben genannten Gründen nachteilig ist.

WO 2010/030046 A1 offenbart ebenfalls Polymerblends oder Copolymere aus (a) einem nichtfluorierten Polymer (z.B. einem Acrylat) und (b) einem Copolymer bestehend aus einem fluorierten Polymer, z.B. einem fluorierten Acrylat, und einem funktionalisierten organischen Polysiloxan. Mit solchen Polymerblends können Textilien waschfest wasser- und ölabweisend beschichtet werden, allerdings ist die Waschbeständigkeit der Beschichtung nur für komplexe Copolymere gegeben, die neben dem organischen Siloxan aus unterschiedlichen Acrylaten, Vinylchlorid, fluoriertem Acrylat, N-Methylolacrylamid etc. bestehen. Das organische Polysiloxan muss ebenfalls aus verschiedenen Komponenten hergestellt und funktionalisiert werden. Nachteilig ist daher die aufwändige Herstellung und Qualitätskontrolle der Polymere.

### Aufgabe

Aufgabe der vorliegenden Erfindung ist es daher, neue Polymere zur Verfügung zu stellen, die zur Beschichtung von Trägersubstanzen geeignet sind und eine waschbeständige wasser- und/oder ölabweisende Schicht auf Trägersubstanzen bilden, die Rollwinkel für Wasser kleiner oder gleich 30° und/oder Kontaktwinkel gegenüber Wasser größer oder gleich 140° aufweist. Darüber hinaus soll ein Verfahren zur Herstellung der neuen Polymerblends bereitgestellt werden. Eine weitere Aufgabe der Erfindung besteht darin, neue waschfeste wasser- und/oder ölabweisende Polymerschichten auf Trägersubstanzen sowie ein Verfahren zu ihrer Herstellung zur Verfügung zu stellen.

### Lösung der Aufgabe

Erfindungsgemäß wird diese Aufgabe dadurch gelöst, dass Polymerblends in wässriger Dispersion (Latex-Blends) zur Verfügung gestellt werden, umfassend
a) wenigstens ein nichtfluoriertes Homo- oder Copolymer (I), erhalten durch Polymerisation von Monomeren ausgewählt aus der Gruppe Alkylacrylat, Alkylmethacrylat, Styrol, Styrol-Derivat, Vinylchlorid, Vinylalkylether, Vinylacetat und Dimethylsiloxan, und
b) wenigstens ein Homo- oder Copolymer (II) umfassend eine polyfluorierte Komponente oder ein Polydiorganosiloxan,
wobei
▪ der Anteil der polyfluorierten Komponente oder des Polydiorganosiloxans im Latex-Blend für eine polyfluorierte Komponente 2 bis 40 Mol% und für ein Polydiorganosiloxan 30 bis 90 Mol% bezogen auf die Monomereinheiten beträgt,
▪ der Rollwinkel des verfilmten Latex-Blends für Wasser kleiner oder gleich 30° ist
▪ und/oder Kontaktwinkel des verfilmten Polymerblends gegenüber Wasser größer oder gleich 140° ist.

Nachfolgend wird das wenigstens eine Homo- oder Copolymer (I) als Polymer (I) und das wenigstens eine Homo- oder Copolymer (II) als Polymer (II) bezeichnet.

Die Polymere (I) und (II) werden beispielsweise als wässrige Dispersionen durch Emulsionspolymerisation hergestellt. Dabei kann ein Cosolvens wie z. B. Aceton eingesetzt werden. Entsprechende Syntheseanleitungen sind dem Fachmann bekannt.

Die Durchmesser der Polymerpartikel der Polymere (I) und (II) liegen bevorzugt zwischen 60 und 150 nm.

Das nichtfluorierte Polymer (I) ist ein Polyacrylat, ein Polystyrol, ein Polyvinylchlorid, ein Polyvinylether oder ein Polyvinylacetat. Alternativ enthält das Polymer (I) Monomereinheiten, die Derivate einer oder mehrerer der genannten Verbindungen sind. Das Polymer (I) ist ein Homopolymer oder ein Copolymer oder Blend aus diesen Komponenten. Im Falle eines Copolymers oder eines Blends ist es möglich, dass Monomere mehrerer der genannten Substanzklassen gemeinsam im Polymer (I) vorhanden sind oder dass nur eine Substanzklasse, aber z. B. mit verschiedenen Seitengruppen vorhanden ist. Als Polymer (I) wird weiterhin Polydimethylsiloxan eingesetzt.

In einer bevorzugten Ausführungsform der Erfindung ist das nichtfluorierte Polymer (I) ein Alkylacrylat- oder Alkylmethacrylat-Polymer. Das Alkylacrylat oder Alkylmethacrylat hat eine C-Kettenlänge des Alkylrests zwischen C₁₀ und C₂₄, bevorzugt zwischen C₁₆ und C₂₀, besonders bevorzugt von C₁₈.

Gemäß einer weiteren bevorzugten Ausführungsform ist die fluorierte Komponente im Polymer (II) ein polyfluoriertes Alkylacrylat oder Alkylmethacrylat. Der Alkylrest im polyfluorierte Alkylacrylat oder Alkylmethacrylat hat eine C-Kettenlänge zwischen C₈ und C₂₀, bevorzugt zwischen C₈ und C₁₂, besonders bevorzugt von C₁₀.

Die Alkylreste der Alkylacrylate oder -methacrylate im Polymer (I) und (II) sind linear oder verzweigt.

Das Polymer (II) enthält darüber hinaus beispielsweise Tetrafluorethylen als fluorierte Komponente. Andere dem Fachmann bekannte polyfluorierte Monomere können ebenfalls als fluorierte Komponente eingesetzt werden.

Vorteilhaft ist es insbesondere, wenn die Polymere (I) oder (II) Homopolymere sind. Besonders vorteilhaft ist es, wenn Polymer(I) und (II) Homopolymere sind.

In einer bevorzugten Ausführungsform der Erfindung ist sowohl das Polymer (I) als auch das Polymer (II) ein Alkylacrylat oder ein Alkylmethacrylat. Dabei ist es v. a. vorteilhaft, wenn das Polymer (I) ein Alkyl(meth)acrylat-Homopolymer ist. Ebenso vorteilhaft ist es, wenn das Polymer (II) ein Homopolymer aus einem polyfluorierten Alkylmethacrylat ist. Besonders gute Ergebnisse für Polymerblends mit einer fluorierten Komponente im Polymer (II) werden erreicht, wenn das Polymer (I) ein Alkyl(meth)acrylat-Homopolymer ist und das Polymer (II) ein Homopolymer aus einem polyfluorierten Alkylmethacrylat ist. Gemäß einer am meisten bevorzugten Ausführungsform besteht der Polymerblend aus einem Octadecylacrylat-Homopolymer oder einem Octadecylmethacrylat-Homopolymer als Polymer (I) und einem Homopolymer aus 1H,11H,2H,2H-Perfluordecylmethacrylat als Polymer (II).

Wird ein siloxanhaltiges Polymer (II) für den Blend verwendet, kann eine wässrige Dispersion eines Polydiorganosiloxans eingesetzt werden. In einer bevorzugten Ausführungsform wird eine wässrige Dispersion von Polydimethylsiloxan als Blend-Komponente verwendet.

Überraschenderweise wurde gefunden, dass durch Zumischen von einem nichtfluorierten Polymer (I) zu einem polyfluorierten Polymer (II) (Mischen der wässrigen Polymerdispersionen) die Hydrophobie der verfilmten Blends nicht wie erwartet ab-, sondern zunimmt.

Die Rollwinkel der verfilmten Blends für Wasser nehmen im Vergleich zu denen für das nicht verblendete Polymer (II) nicht zu, sondern sinken im Gegenteil. Für erfindungsgemäße Blends werden daher Werte kleiner oder gleich 30 ° erreicht. In bevorzugten Ausführungsbeispielen werden Rollwinkel für Wasser kleiner oder gleich 20°, in besonders bevorzugten Fällen kleiner oder gleich 15° oder sogar kleiner oder gleich 10° erreicht. Ebenso steigen die Kontaktwinkel gegenüber Wasser und erreichen in besonders bevorzugten Ausführungsbeispielen Werte größer oder gleich 160° entsprechend dem superhydrophoben Bereich. In weiteren Ausführungsbeispielen haben erfindungsgemäße Polymerblends nach dem Verfilmen Kontaktwinkel gegenüber Wasser größer oder gleich 150°. Im Allgemeinen liegen die Kontaktwinkel für erfindungsgemäße Polymerblends nach dem Verfilmen auf einer Trägersubstanz bei Werten größer oder gleich 140°.

Besonders unerwartet war es, dass Polymerblends, die nur einen geringen Anteil polyfluoriertes Polymer enthalten, der zwischen 2 und 40 Mol% fluoriertes Monomer im Blend liegt, die niedrigsten Rollwinkel für Wasser haben. In einer bevorzugten Ausführungsform beträgt der Anteil der polyfluorierten Komponente im Polymerblend 10 bis 30 Mol% bezogen auf die Monomereinheiten, in einer besonders bevorzugten Ausführungsform 15 bis 30 Mol% und in einer ganz besonders bevorzugten Ausführungsform 20-30 Mol%. Gemäß einem weiteren Ausführungsbeispiel werden Latex-Blends zum Beschichten von Trägersubstanzen verwendet, die einen Anteil von 26 Mol% fluorierte Komponente enthalten. Überraschend war es auch, dass das Polymer (II) anstelle der fluorierten Komponente in weiteren Ausführungsformen der Erfindung eine Polydiorganosiloxan-Komponente enthalten kann. Rollwinkel kleiner oder gleich 30° werden für verfilmte Blends erreicht, wenn der Anteil des Polydiorganosiloxans im Polymerblend 30 bis 90 Mol% bezogen auf die Monomereinheiten beträgt. Gute Ergebnisse werden insbesondere bei einem Anteil des Polydiorganosiloxans im Blend von 40 bis 85 Mol% erreicht. Bevorzugterweise beträgt der Anteil des Polydiorganosiloxans im Blend 50 bis 80 Mol%, besonders bevorzugt ist ein Anteil von 60 bis 80 Mol%.

Bevorzugte Ausführungsbeispiele, die eine Polydiorganosiloxan-Komponente im Polymer (II) enthalten, haben Rollwinkel kleiner oder gleich 20° oder sogar kleiner oder gleich 15°. Die Kontaktwinkel gegenüber Wasser sind für erfindungsgemäße Polymerblends, die eine Diorganosiloxan-Komponente im Polymer (II) enthalten, wie die für fluorierte Polymere (II) größer oder gleich 140°. Für bevorzugte Ausführungsbeispiele mit einer Polydiorganosiloxan-Komponente sind sie größer oder gleich 150°, für besonders bevorzugte Ausführungsbeispiele größer oder gleich 160°.

Ein wesentlicher Aspekt der Erfindung besteht darin, dass die Polymerblends vorzugsweise keine Substanzen enthalten, die die Ketten der Polymere (I) und (II) chemisch untereinander vernetzen. Erfindungsgemäße Polymerblends weisen bevorzugt keine chemischen Bindungen zwischen den einzelnen Polymerketten oder den Polymerpartikeln auf. Weiterhin enthalten die erfindungsgemäßen Polymerblends bevorzugt keine chemischen Gruppen, die eine chemische Kopplung an Trägersubstanzen vermitteln. Im Falle der Verwendung einer Polydiorganosiloxan-Komponente oder von Polydimethylsiloxan als Polymer (II) findet keine Reaktion des Siloxans mit Komponenten des Polymers (I) statt.

Das Verfahren zur Herstellung der erfindungsgemäßen Polymerblends in wässriger Dispersion (Latex-Blends) sieht vor, dass eine wässrige Dispersion des wenigstens einen nichtfluorierten Homo- oder Copolymers (I), erhalten durch Polymerisation von Monomeren ausgewählt aus der Gruppe Alkylacrylat, Alkylmethacrylat, Styrol, Styrol-Derivat, Vinylchlorid, Vinylalkylether, Vinylacetat und Dimethylsiloxan, und eine wässrige Dispersion des wenigstens einen Homo- oder Copolymers (II), umfassend eine polyfluorierte Komponente oder ein Polydiorganosiloxan, gemischt werden, wobei der Anteil der polyfluorierten Komponente oder des Polydiorganosiloxans im Latex-Blend für eine polyfluorierte Komponente 2 bis 40 Mol% und für ein Polydiorganosiloxan 30 bis 90 Mol% bezogen auf die Monomereinheiten beträgt. Besonders einfach ist dies, wenn die Polymere (I) und (II) durch Emulsionspolymerisation in wässriger Lösung synthetisiert wurden. Die erhaltene Polymerdispersion kann dann direkt zur Herstellung des Blends weiter verwendet werden. Bei der Emulsionspolymerisation kann ein Cosolvens, beispielsweise Aceton, eingesetzt werden, das für die Herstellung des Polymerblends in der Dispersion verbleiben kann.

In einer bevorzugten Ausführungsform werden ein nichtfluoriertes Alkylacrylat-Polymer oder ein Alkylmethacrylat-Polymer sowie ein fluoriertes Alkylacrylat-Polymer oder ein fluoriertes Alkylmethacrylat-Polymer durch Emulsionspolymerisation in wässriger Lösung hergestellt. Die erhaltenen Polymer-Latices werden gemischt, wobei der Anteil der fluorierten Komponente im Polymerblend 2 bis 40 Mol%, bevorzugt 10 bis 30 Mol%, besonders bevorzugt 15 bis 30 Mol%, ganz besonders bevorzugt 20-30 Mol% bezogen auf die Monomereinheiten beträgt.

Im Falle der Verwendung eines Polymers (II), das eine Diorganosiloxan-Komponente enthält, werden die Polymere (I) und (II) so gemischt, dass der Anteil des Diorganosiloxans im Blend 30 bis 90 Mol%, bevorzugt 40 bis 85 Mol%, besonders bevorzugt 50 bis 80 Mol%, ganz besonders bevorzugt 60 bis 80 Mol% beträgt.

Besonders bevorzugt sind erfindungsgemäße Polymerblends, die aus Homopolymeren (I) und (II) hergestellt werden.

In einem Ausführungsbeispiel wird als Polymer (II) eine kommerziell erhältliche wässrige Polydimethylsiloxan-Dispersion verwendet und mit einem Homopolymer (I) gemischt, das beispielsweise durch Emulsionspolymerisation hergestellt wurde. Vorteilhaft an derartigen Polymerblends ist insbesondere deren einfache Herstellung.

Die Aufgabe der Erfindung wird darüber hinaus dadurch gelöst, dass ein Verfahren zur Erzeugung einer erfindungsgemäßen Schicht auf einer Trägersubstanz zur Verfügung gestellt wird, wobei der Polymerblend nach dem Auftragen auf die Trägersubstanz durch Tempern für mindestens 30 Minuten, bevorzugt für mindestens 60 Minuten, besonders bevorzugt für mindestens 90 Minuten, ganz besonders bevorzugt für mindestens 120 Minuten und am meisten bevorzugt für 180 Minuten bei einer Temperatur oberhalb der Schmelztemperatur desjenigen Polymers (I) oder (II) im Blend verfilmt wird, das die höchste Schmelztemperatur besitzt.

Als Schmelztemperatur ist die nicht eindeutig definierte Erweichungstemperatur eines Polymers gemeint, bei der die Polymerpartikel anfangen zu erweichen und ihre Struktur zu ändern. Dem Fachmann ist bekannt, dass dies bei rein amorphen Polymeren korrekterweise der Glaspunkt ist, oberhalb dessen bei genügender Absenkung der Viskosität durch Temperaturerhöhung auch die Erweichung einsetzt. Im strengen Sinne der Definition haben nur kristalline oder genauer gesagt teilkristalline Polymere einen Schmelzpunkt, da Polymere, wenn sie kristallisieren, dies nur sehr selten vollständig tun. Der Schmelzpunkt ist dabei eben der Punkt, an dem die Kristallite schmelzen. Bei Polyalkylacrylaten liegen bedingt durch die langen Alkylseitenketten teilkristalline Bereiche vor, da Seitenkettenkristallisation stattfindet. Auch bei polyfluorierten Alkyl(meth)acrylaten tritt Seitenkettenkristallisation auf, die zusätzlich durch die Fluorierung bedingt wird. Tatsächlich beobachtet man bei Polymeren keinen scharfen Schmelzpunkt, sondern eher einen Schmelzbereich.

Die Schmelz- oder Glasübergangstemperatur von Polymeren kann mithilfe von dynamischer Differentialkalorimetrie (DSC) bestimmt werden. Kristalline oder teilkristalline Bereiche in einem Polymer werden über Röntgenpulverdiffraktometrie ermittelt.

In einer Ausführungsform der Erfindung wird der Polymerblend auf der Oberfläche einer Trägersubstanz durch Tempern bei mindestens 100°C für wenigstens 60 Minuten verfilmt. In einer bevorzugten Ausführungsform der Erfindung werden Blends bestehend aus einem Octadecylacrylat- oder Octadecylmethacrylat-Homopolymer als Polymer (I) und einem Homopolymer aus 1H,1H,2H,2H-Perfluordecylmethacrylat als Polymer (II) durch Tempern bei mindestens 100°C für wenigstens 60 Minuten verfilmt.

Eine weitere Lösung der Aufgabe der Erfindung besteht in der Bereitstellung neuer waschfester wasser- und ölabweisender Polymerschichten. Überraschenderweise wurde gefunden, dass Polymerblends in wässriger Dispersion (Latex-Blends), umfassend a) wenigstens ein nichtfluoriertes Homo- oder Copolymer (I), erhalten durch Polymerisation von Monomeren ausgewählt aus der Gruppe Alkylacrylat, Alkylmethacrylat, Styrol, Styrol-Derivat, Vinylchlorid, Vinylalkylether, Vinylacetat und Dimethylsiloxan, und b) wenigstens ein Homo- oder Copolymer (II) umfassend eine polyfluorierte Komponente oder ein Polydiorganosiloxan, wobei der Anteil der polyfluorierten Komponente oder des Polydiorganosiloxans im Latex-Blend für eine polyfluorierte Komponente 2 bis 40 Mol% und für ein Polydiorganosiloxan 30 bis 90 Mol% bezogen auf die Monomereinheiten beträgt, nach Tempern für mindestens 30 Minuten bei einer Temperatur oberhalb der Schmelztemperatur desjenigen Polymers (I) oder (II) im Blend, das die höchste Schmelztemperatur besitzt, auf Trägersubstanzen eine wasser-, schmutz- und ölabweisende Schicht bilden. Die Polymerschicht weist Rollwinkel für Wasser kleiner oder gleich 30° auf. Die Kontaktwinkel einer erfindungsgemäßen Polymerschicht gegenüber Wasser sind größer oder gleich 140°. In bevorzugten Ausführungsbeispielen hat die Polymerschicht einen Rollwinkel kleiner oder gleich 20°, besonders bevorzugt kleiner oder gleich 15°. Weitere bevorzugte Ausführungsbeispiele sind Polymerschichten mit Kontaktwinkeln gegenüber Wasser größer oder gleich 150°, besonders bevorzugt größer oder gleich 160°. Solche Polymerschichten entsprechen superhydrophoben Oberflächen.

Als Trägersubstanzen eignen sich insbesondere Substanzen mit einer strukturierten Oberfläche. Beispielsweise können Textilgewebe, Vliese, Papier, Keramik, Metalle, Glas, Leder oder Kunststoffe beschichtet werden. Besonders niedrige Rollwinkel und besonders hohe Kontaktwinkel werden mit Baumwollgewebe erzielt. Bevorzugt ist insbesondere die Verwendung von groben Baumwollgeweben.

Beispielsweise bildet ein Latex-Blend aus einem Alkylacrylat- oder Alkylmethacrylat-Homopolymer und einem polyfluorierten Alkylacrylat- oder Alkylmethacrylat-Homopolymer nach Tempern bei mindestens 100°C für wenigstens 60 Minuten auf Textilgeweben eine Polymerschicht mit Rollwinkeln für Wasser kleiner als 20°. Die Kontaktwinkel gegenüber Wasser liegen zwischen 140° und 165°, reichen also bis in den superhydrophoben Bereich.

Ein besonders bevorzugtes Ausführungsbeispiel einer erfindungsgemäßen Polymerschicht ist ein Polymerblend aus einem Octadecylacrylat-Homopolymer oder einem Octadecylmethacrylat-Homopolymer als Polymer (I) und einem Homopolymer aus 1H,11H,2H,2H-Perfluordecylmethacrylat als Polymer (II), das auf Textilgewebe aufgebracht ist. Besonders gute Ergebnisse werden dabei mit Baumwollgeweben erreicht.

Ein weiteres bevorzugtes Ausführungsbeispiel ist eine Polymerschicht bestehend aus einem Octadecylacrylat-Homopolymer oder einem Octadecylmethacrylat-Homopolymer als Polymer (I) und Dimethylsiloxan als Polymer (II), die durch Beschichtung von Trägersubstanzen, insbesondere Textilien, mit einem entsprechenden Polymerblend erhalten wird. Bei Polymerschichten, die im Polymerblend ein Polymer (II) mit einer polyfluorierten Komponente enthalten, beträgt der Anteil an fluoriertem Monomer im Blend und damit auch in der Polymerschicht 2 bis 40 Mol%, bevorzugt 10 bis 30 Mol%, besonders bevorzugt 15 bis 30 Mol%, ganz besonders bevorzugt 20-30 Mol% bezogen auf die Monomereinheiten. Für Polymerschichten aus Polymerblends mit einer Diorganosiloxan-Komponente im Polymer (II) liegt der Anteil an Diorganosiloxan im Blend bezogen auf die Monomereinheiten bei 30 bis 90 Mol%, bevorzugt bei 40 bis 85 Mol%, besonders bevorzugt bei 50 bis 80 Mol% und ganz besonders bevorzugt bei 60 bis 80 Mol%.

Charakteristisch für erfindungsgemäße Polymerschichten ist ihre mikroskopische Struktur. Aufgrund ihrer Herstellung aus Latex-Blends besitzen sie eine chemisch heterogene Struktur mit getrennten Bereichen aus Polymer (I) und Polymer (II). Den getrennten Bereichen der Polymere (I) und (II) entspricht eine physikalische Oberflächenstrukturierung im Mikrometerbereich. Die chemisch heterogene Struktur und physikalische Oberflächenstrukturierung kann mithilfe von Rasterkraftmikroskopie sichtbar gemacht und analysiert werden. In Rasterkraftmikroskopie-Aufnahmen erfindungsgemäßer Polymeroberflächen sind die getrennten Bereiche aus Polymer (I) und Polymer (II) als "Fleckenmuster" sichtbar. In bevorzugten Ausführungsbeispielen haben die getrennten Bereiche der Polymere (I) und (II) Ausdehnungen und/oder Höhenunterschiede von wenigstens 1 µm, bevorzugt zwischen 1 und 30 µm, besonders bevorzugt zwischen 10 und 20 µm.

Im Gegensatz dazu wird für Polymerschichten im Stand der Technik, die zur wasser-, schmutz- oder ölabweisenden Ausrüstung von Trägersubstanzen polyfluorierte Komponenten enthalten, beschrieben, dass eine starke Anreicherung der fluorierten Segmente an der Grenzfläche zur Luft erfolgt. Diese Anreicherung kommt durch die nahezu vollständige Diffusion der fluorierten Polymere an die Oberfläche zustande.

Weiterhin wird in der Fachliteratur und in Patentschriften diskutiert, dass sich die Anordnung der Partikel durch Kontakt mit Wasser (z.B. im Regen oder beim Waschen) ändert, da sich nun die fluorierten Polymerpartikel weg vom Wasser und somit weg von der Grenzfläche orientieren, was die mangelnde Waschbeständigkeit bekannter Polymere erklären könnte.

Sehr überraschend war daher die Beobachtung, dass erfindungsgemäße Polymerschichten beständig gegenüber Wasser bis 60°C sind. Auch nach mehrmaligem Waschen bei 60°C ändern sich die Rollwinkel für Wasser praktisch nicht. Die Kontaktwinkel gegenüber Wasser bleiben nach mehrmaligem Waschen bei 60°C ebenfalls nahezu unverändert.

Erfindungsgemäße Polymerschichten sind außerdem ölabweisend. Ferner nehmen sie Schmutz wie z. B. Ketchup nicht an, so dass sich die Verschmutzung restlos durch Waschen entfernen lässt.

Beschichtungen von Textilgeweben mit Polymerblends, die 20-30 Mol% 1 H,1 H,2H,2H-Perfluordecylmethacrylat und 70-80 Mol% Octadecylacrylat oder Octadecylmethacrylat enthalten, haben die niedrigsten Rollwinkel für Wasser, die bis zu Werten unter 10° reichen. Solche Beschichtungen haben auch die höchsten Kontaktwinkel gegenüber Wasser, die zwischen 140° und 165° liegen. Beschichtungen aus einem 1H,1H,2H,2H-Perfluordecylmethacrylat-Homopolymer, das also aus 100 Mol% fluoriertem Acrylat besteht, haben im Vergleich zu den erfindungsgemäßen Polymerschichten Rollwinkel zwischen 10° und 15°, die somit größer als die der Blends sind. Beschichtungen aus einem Octadecyl(meth)acrylat-Homopolymer ohne fluorierte Komponente haben ebenfalls deutlich größere Rollwinkel.

Überraschenderweise werden sehr niedrige Rollwinkel kleiner oder gleich 30° auch mit Polymerblends erreicht, die im Polymer (II) anstelle der polyfluorierten Komponente ein Polydiorganosiloxan enthalten. Solche Polymerblends weisen ebenfalls sehr hohe Kontaktwinkel größer oder gleich 140 ° auf.

In einer bevorzugten Ausführungsform wird das Polydiorganosiloxan verblendet mit einem Alkylacrylat, besonderes bevorzugt mit einem Octadecylacrylat-Homopolymer. Besonders bevorzugt ist eine Polymerschicht aus einem Blend, der aus Polydimethylsiloxan als Polymer (II) und einem Octadecylacrylat-Homopolymer als Polymer (I) besteht. Bei einem Anteil von 50 bis 80 Mol% Dimethylsiloxan im Blend weist eine solche Polymerschicht Rollwinkel für Wasser unter 15° auf. Die Kontaktwinkel gegenüber Wasser liegen über 145°.

Zum Beschichten von Trägersubstanzen mit den erfindungsgemäßen Polymerblends in wässriger Dispersion können prinzipiell alle Techniken verwendet werden, die dem Fachmann zum Auftragen von flüssigen Substanzen auf Oberflächen bekannt sind. Beispiele für solche Methoden zum Auftragen der Polymerblends sind Dipcoating, Sprühen, Rakeln, Elektrospinnen oder Spincoaten.

Die erfindungsgemäßen Polymerblends eignen sich zur Herstellung einer wasserbeständigen hydrophoben und/oder oleophoben Polymerschicht auf Trägersubstanzen, wobei die Polymerschicht einen Rollwinkel für Wasser kleiner oder gleich 30 °, bevorzugt kleiner oder gleich 20°, besonders bevorzugt kleiner oder gleich 15° aufweist. Weiterhin eignen sich die Polymerblends für die Herstellung von Polymerschichten, die einen Kontaktwinkel gegenüber Wasser größer oder gleich 140°, bevorzugt größer oder gleich 150°, besonders bevorzugt größer oder gleich 160° aufweisen und damit sehr gute hydrophobe bis sogar superhydrophobe Eigenschaften haben.

Erfindungsgemäße Polymerschichten können als wasserbeständige hydrophobe und/oder oleophobe Beschichtung von Trägersubstanzen mit strukturierten Oberflächen verwendet werden. Als Trägersubstanzen sind insbesondere Textilien, Vliese, Papier, Keramik, Kunststoffe, Metall oder Glas geeignet. Eine bevorzugte Ausführungsform der Erfindung liegt in der Verwendung der Polymerschichten als wasser- und/oder ölabweisende Beschichtung von Baumwollgewebe.

Damit sind die erfindungsgemäßen Polymerblends und Polymerschichten für eine Vielzahl von Bereichen interessant. Dazu zählen die Textilindustrie, etwa für die Herstellung wasser- und ölabweisender Kleidung, aber auch die Herstellung von Gebrauchsgegenständen wie z. B. Zeltplanen oder Markisenstoffen. Beschichtungen von Papier könnten als Spezialtapeten Einsatz finden. Weitere Einsatzmöglichkeiten liegen in allen Bereichen, in denen Materialien benötigt werden, die sich durch eine sehr starke Hydrophobie auszeichnen. Ebenso sind alle Einsatzgebiete denkbar, für die Materialien mit einer hohen Resistenz gegen Schmutz und Öl wünschenswert sind.

### Ausführungsbeispiele

### Emulsionspolymerisation zur Darstellung von nichtfluorierten Acrylat- und Methacrylat-Homopolymeren

Die Emulsionspolymerisationen zur Darstellung von Homopolymeren werden in einem Reaktionsgefäß mit Rührmotor, Rührblatt und einer Verbindung zu einer Argon-Leitung durchgeführt. Als Monomere werden beispielsweise Stearylmethacrylat oder Stearylacrylat eingesetzt.

| | |
|---|---|
| Stearylmethacrylat (C18MA): | ₂HC=C(CH₃)-(C=O)-O-(CH₂)₁₇-CH₃ |
| Stearylacrylat (C18A): | ₂HC=CH-(C=O)-O-(CH₂)₁₇-CH₃ |

Als Emulgatoren werden der nichtionische Emulgator Lutensol AT 80 und der kationische Emulgator Hexadecyltrimethylammoniumbromid (C16TAB) verwendet, um die wasserunlöslichen Monomere in Wasser zu vermengen und zu stabilisieren. Zusätzlich werden 0,0005 Mol-Äquivalente Natriumhydrogencarbonat (NaHCO₃) zur Reaktion hinzugefügt, um eventuelle pH-Wert Änderungen auszugleichen.

Als Cosolvens wird Aceton verwendet, da es mit Wasser in allen Verhältnissen mischbar ist und die eingesetzten Monomere ausreichend in Wasser löst. Da die Reaktion bei 65°C stattfindet, muss die Durchflussgeschwindigkeit des Argon-Stroms klein gehalten werden, damit das Aceton nicht schon vor der Reaktion aus dem Reaktor herausgetragen wird. Das Cosolvens hat Einfluss auf den Umsatz, die Kinetik und die Partikelgröße. Bei einem Verhältnis Wasser zu Aceton von 1,00:0,58 werden hohe Ausbeuten erreicht.

Zur Initiierung wird der wasserlösliche Azoinitiator 2,2'-Azobis(2-amidinopropan)dihydrochlorid (V-50) verwendet, der bei einer Temperatur von 60°C thermisch zerfällt und die Polymerisation startet.

Die Emulgatoren und das Natriumhydrogencarbonat werden in einem Reaktionskolben in Wasser unter Rühren evakuiert. Mit Hilfe eines 45°C warmen Wasserbads wird die Lösung auf eine Innentemperatur von 40°C erwärmt. Anschließend erfolgt die Zugabe von Monomer und Cosolvens. Bei einer Innentemperatur von 50°C wird der Initiator V-50 zugegeben, und der Ansatz wird weiter auf 65°C erhitzt. Bei dieser Temperatur wird die Polymerisation für 4 h durchgeführt. Dabei liegt die Rührgeschwindigkeit zwischen 300 und 500 U/min. Nach Polymerisationsende wird das Reaktionsgemisch bei einer Rührgeschwindigkeit von 150 U/min auf Raumtemperatur abgekühlt. Die Ausbeuten werden durch Ausfällen der erhaltenen Dispersion bestimmt. Das abgeschiedene Polymer an Rührblatt und Gefäßwand wurde dabei nicht mit berücksichtigt. Beispielhafte Ansätze sind in Tab. 1 aufgeführt.

**Tab. 1: Ansätze zur Herstellung nichtfluorierter Poly(meth)acrylate**

| **Substanz** | **Einwaage** | | | | |
|---|---|---|---|---|---|
| | Ansatz 1 | Ansatz 2 | Ansatz 3 | Ansatz 4 | Ansatz 5 |
| Wasser | 55,0 ml | 55,0 ml | 50,0 ml | 50,2 ml | 100,0 ml |
| Aceton | 28,5 ml | 28,6 ml | 16,8 ml | 16,7 ml | 27,5 ml |
| C16TAB | 0,4324 g | 0,4337 g | 0,1543 g | 0,1553 g | 0,1556 g |
| Lutensol AT80 | 0,4523 g | 0,4555 g | 0,4168 g | 0,4171 g | 0,4167 g |
| NaHCO3 | 0,0097 g | 0,0105 g | 0,0162 g | 0,0170 g | 0,0167 g |
| C18A | | | 8,32 ml | 8,33 ml | 8,33 ml |
| C18MA | 22,0 ml | 22,0 ml | | | |
| V-50 | 0,4100 g | 0,4547 g | 0,0869 g | 0,0851 g | 0,0858 g |
| Rührgeschwindigkeit | 300 U/min. | 300 U/min. | 400 U/min. | 500 U/min. | 400 U/min. |
| Ausbeute | 87,7% | 86,6% | 39,2% | 21,0% | 65,6% |
| Masse der Emulsion | 90,34 g | 81,06 g | 66,14 g | 53,57 g | 56,58 g |
| Feststoffgehalt in Gew.% | 18,4 | 20,3 | 5,0 | 3,3 | 9,7 |
| Masse Feststoff | 16,62 g | 16,46 g | 3,26 g | 1,75 g | 5,48 g |
| Mol Feststoff | 49,1 mmol | 48,6 mmol | 10,04 mmol | 5,38 mmol | 16,87 mmol |

Die erhaltenen Polymere werden nachfolgend mit PC18A für Polystearylacrylat und PC18MA für Polystearylmethacrylat abgekürzt.

### Emulsionspolymerisation zur Darstellung von fluorierten Acrylat- und Methacrylat-Homopolymeren

Die Emulsionspolymerisation wird wie für die nichtfluorierten Acrylate beschrieben mit der folgenden Abwandlung durchgeführt:
1. Als Monomer wird Heptadecafluorodecylmethacrylat (FMA) verwendet:

   ₂HC=C(CH₃)-(C=O)-O-CH₂-CH-(CF₂)₇-CF₃
2. Es wird nur der kationische Emulgator Hexadecyltrimethylammoniumbromid (C16TAB) eingesetzt.
3. Es wird eine Rührgeschwindigkeit von 750 U/min verwendet, um das System vollständig zu vermischen.

Die Ansätze sind in Tabelle 2 aufgelistet.

**Tab. 2: Ansätze zur Herstellung fluorierter Polymethacrylate**

| **Substanz** | **Einwaage** | | | |
|---|---|---|---|---|
| | Ansatz 6 | Ansatz 7 | Ansatz 8 | Ansatz 9 |
| Wasser | 35,1 ml | 40,0 ml | 43,0 ml | 40,0 ml |
| Aceton | 20,2 ml | 23,0 ml | 24,7 ml | 23,0 ml |
| C16TAB | 0,1787 g | 0,2049 g | 0,2169 g | 0,2040 g |
| NaHCO3 | 0,0065 g | 0,0106 g | 0,0151g | 0,0071 g |
| FMA | 4,0 ml | 2,2 ml | 4,9 ml | 4,3 ml |
| V-50 | 0,0653 g | 0,0743 g | 0,0799 g | 0,0768 g |
| Rührgeschwindigkeit | 750 U/min | 800 U/min | 800 U/min | 750 U/min |
| Ausbeute | 33,1% | 35,6% | 31,3% | 69,2% |
| Masse der Emulsion | 39,02 g | 33,86 g | 38,89 g | 43,71 g |
| Feststoffgehalt der Dispersion | 5,4 Gew.% | 3,7 Gew.% | 6,3 Gew.% | 10,9 Gew.% |
| Masse Feststoff | 2,11 g | 1,25 g | 2,45 g | 4,75 g |
| Mol Feststoff | 3,97 mmol | 2,35 mmol | 4,60 mmol | 8,93 mmol |

Die erhaltenen Polymere werden nachfolgend mit PFMA für Poly-Heptadecafluorodecylmethacrylat abgekürzt.

### Bestimmung der Partikelgröße der durch Emulsionspolymerisation hergestellten Acrylat-Polymere

Die Partikelgrößen der Polymerpartikel werden mit dynamischer Lichtstreuung (DLS) detektiert und zusätzlich mit Hilfe von Rasterelektronenmikroskop (REM)-Aufnahmen vermessen. Zur Dynamischen Lichtstreuung (DLS) wurde die Partikelgrößenverteilung einer kolloidalen Dispersion mittels Photoelektronenspektroskopie bestimmt. Hierzu diente ein He-Ne-Laser als Lichtquelle mit einer Intensität von 10 mW. Die Streulichtintensität wurde in einem 90°-Winkel zur Lichtquelle gemessen. Als Probengefäße wurden Acrylküvetten mit einem Messvolumen von 3,5 ml verwendet. Die gemessenen Probenlösungen lagen in einem Bereich, der am Detektor eine Signalhäufigkeit von 5*10⁴ bis 1*10⁶ counts pro Sekunde verursachte. Aus der Fluktuationshäufigkeit der gemessenen Signale wurde die Brown'sche Bewegung ermittelt, die wiederum als Berechnungsgrundlage für den Diffusionskoeffizienten diente. Die daraus ermittelten Partikelgrößenverteilungen wurden mit der vom Gerätehersteller mitgelieferten Software ausgewertet. Die Ergebnisse sind in Tab. 3 aufgelistet.

**Tab. 3: Durchschnittliche Partikeldurchmesser der Emulsionen.**

| **Ansatz-Nr.** | **Monomer** | **Partikeldurchmesser in nm** | |
|---|---|---|---|
| | | DLS | REM |
| 1 | C18MA | 152 ± 72 | 137 ± 11 |
| 2 | C18MA | 188 ± 78 | 138 ± 15 |
| 3 | C18A | 85 ± 22 | < 60 |
| 4 | C18A | 67±18 | 111 ±10 |
| 5 | FMA | n.d.* | 91 ± 8 |
| 6 | FMA | n.d.* | 131 ± 14 |
| 7 | FMA | n.d.* | 138 ± 12 |
| 8 | FMA | 312 ± 49 | 143 ± 9 |
| 9 | FMA | 195 ± 94 | 107 ± 14 |

| | | | |
|---|---|---|---|
| *: Die Partikeldurchmesser der Proben konnten nicht gemessen werden, da die Emulsionen sedimentierten und die einzelnen Partikel Agglomerate bildeten. | | | |

Zur Analyse im Rasterelektronenmikroskop (REM) werden die Proben vorher mit Platin im Hochvakuum bedampft. Die Bedampfungszeit variierte von 60-120 Sekunden. Die Bestimmung der Partikeldurchmesser erfolgte mit Hilfe der Software ImageJ. Es wurden je 200 Partikel vermessen und der Durchschnitt errechnet. Die Ergebnisse sind in Tab. 3 aufgelistet.

Die Partikelgrößen, die anhand von REM-Aufnahmen bestimmt wurden, liegen im Bereich von 60-150 nm. Dies ist die Größenordnung der Partikel, die typischerweise mittels Emulsionspolymerisation hergestellt werden können. Starke Abweichungen traten bei den DLS-Messungen auf, da dort nicht der Partikeldurchmesser, sondern der hydrodynamische Radius gemessen wurde.

### Untersuchung weiterer Eigenschaften der Polymere PC18A, PC18MA und PFMA

Zur Untersuchung der Polymere werden diese aus den Emulsionen gefällt. PC18A und PFMA können direkt in Methanol ausgefällt werden. PC18MA wurde 4 h bei 1400 U/min zentrifugiert, der sich an der Oberfläche abgesetzte Pfropfen wurde in Chloroform gelöst und in Methanol ausgefällt. Die nichtfluorierten Alkylacrylate waren in Chloroform, Tetrahydrofuran und Dimethylformamid löslich, das fluorierte PFMA hingegen war in keinem gängigen Lösungsmittel löslich. Es quoll in Tetrahydrofuran, Ethanol, Diethylether und Ethylacetat. Die thermogravimetrische Analyse der Polymere zeigte eine Abbaustufe, dies entsprach dem Abbauverhalten von Homopolymeren, die nur einer Zersetzungsreaktion unterliegen.

Die Analyse mittels Differentialkalorimetrie (DSC) zeigte, dass die dargestellten Polymere keinen Glasumwandlungspunkt (T_{g}) zwischen -100°C und 100°C besitzen.

Zur Bestimmung der Kristallinität wurden Röntgenpulverdiffraktometrie (RPD)-Messungen durchgeführt. Die Diffraktogramme wurden in einem Winkel 2θ von 5° bis 90° aufgenommen. Die graphische Darstellung erfolgte mit der Software OriginPro 7.0. Die Berechnung der Kristallinität erfolgte mit der Formel: Iₐₘₒᵣₚₕ/ I_{gesamt} = kristal. (%)

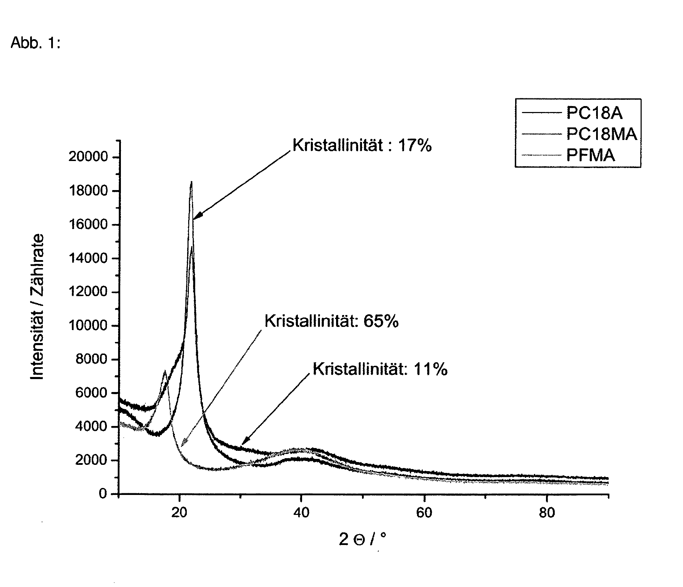

Die Ergebnisse der Messungen sind in Tab. 4 dargestellt. Abbildung 1 zeigt die Röntgenpulverdiffraktogramme der Homopolymere PC18A, PC18MA und PFMA.

Die nichtfluorierten Polymere PC18MA und PC18A sind im Vergleich zum fluorierten PFMA weicher, haben einen niedrigeren Schmelzbereich und eine geringere Seitenkettenkristallinität von 11% für PC18MA bzw. 17% für PC18A. PFMA ist ein hartes, sprödes Polymer. Es schmilzt im Bereich von 91 °C und hat eine Kristallinität von 65%.

**Tab. 4: Ergebnisse der DSC-Messungen der Polymere**

| **Polymer** | **Schmelzpunkt** | **Kristallisation** |
|---|---|---|
| PC18MA | 37°C | 15°C |
| PC18A | 55°C | 38°C |
| PFMA | 91°C | 78°C |

Zur vollständigen Charakterisierung wurden außerdem NMR- und IR-Messungen durchgeführt.

Zur Bestimmung der Grenzviskositäten wurden die Homopolymere PC18MA und PC18A in Chloroform gelöst, und mit Hilfe eines Ubbelohde-Viskosimeters wurden die Viskositäten bestimmt. Dazu wurde eine 0,01 g/l (in 30,0 ml Chloroform) konzentrierte Lösung hergestellt und diese jeweils dreimal mit 5,0 ml Chloroform verdünnt. Jede Verdünnung wurde fünfmal gemessen, wobei die Proben 10 Minuten bei 20 °C vortemperiert wurden. PFMA konnte aufgrund seiner Löslichkeit nicht gemessen werden. Zur graphischen Bestimmung der Grenzviskosität wurde die spezifische Viskosität ηₛₚ geteilt durch die Polymerkonzentration nach einer Gleichung von Huggins gegen die Polymerkonzentration aufgetragen. Der Schnittpunkt der Ausgleichsgeraden mit der y-Achse gibt die Grenzviskosität an. Alle gemessenen Proben wurden auf diese Weise ausgewertet (Tab. 5).

**Tab. 5: Grenzviskositäten der Polymere**

| **Ansatz-Nr.** | **Monomer** | **Grenzviskosität in dl/g** |
|---|---|---|
| 1 | PC18MA | 416.3 ± 34.5 |
| 2 | PC18MA | 365.7 ± 153.5 |
| 3 | PC 18A | 174.7 ± 210.3 |
| 4 | PC18A | 141.1 ± 26.6 |

PC18MA hat durchschnittlich eine höhere Grenzviskosität als PC18A. Die Viskositätserhöhung hängt direkt mit der Molmasse der Polymere zusammen.

### Herstellung der Polymerblends

Durch Mischen der Homopolymer-Dispersionen der Ansätze 1-9 werden Latex-Blends mit den angegebenen Mischungsverhältnissen in Mol% bezogen auf den Monomeranteil im Blend hergestellt.

### DSC Messung (Schmelzpunkt) der Blends

Polymerblends, die 70 mol% nichtfluoriertes Alkylacrylat oder Alkylmethacrylat und 30 mol% fluoriertes Methacrylat enthalten, wurden mithilfe von Differentialkaloriemetrie-Messungen analysiert. Die Ergebnisse für Schmelzpunkt und Kristallisation sind in Tab. 6 dargestellt.

Der Vergleich der Schmelzbereiche und Kristallisationen der Ausgangs-Polymere mit denen der Polymerblends zeigt, dass sich Schmelzbereiche und Kristallisationen im Blend kaum verändern und ein inhomogener Blend vorliegt.

**Tab. 6: Vergleich der Schmelzpunkte und Kristallisationen der Polymere mit den Polymerblends**

| **Polymer bzw. Blend** | **Schmelzpunkt** | **Kristallisation** |
|---|---|---|
| PC18MA | 37 °C | 15 °C |
| PC18A | 55 °C | 38 °C |
| PFMA | 91 °C | 78 °C |
| PC18MA/PFMA | 38 °C / 84°C | 13 °C / 71 °C |
| PC18A/PFMA | 57 °C / 91°C | 38 °C / 80 °C |

### Analyse der verfilmten Polymerblends mittels Rasterkraftmikroskopie

Die Phasenseparation der inhomogenen Polymerblends wird mit Hilfe von Rasterkraftmikroskopie (AFM)-Messungen untersucht. Hierfür wurde der Latexblend PC18A/PFMA mit einem Mischungsverhältnis von 80/20 mol% hergestellt. Das alkylierte Acrylat wurde gewählt, da es bei Raumtemperatur nicht verfilmt. Der Latexblend wurde jeweils auf eine 2x2 cm große Glasplatte getropft und bei Raumtemperatur, bei 60°C für 16 Stunden und bei 100°C für 3 Stunden getrocknet. Anschließend wurden die Proben mit Hilfe von Rasterkraftmikroskopie im "tapping mode" unter Standardbedingungen untersucht.

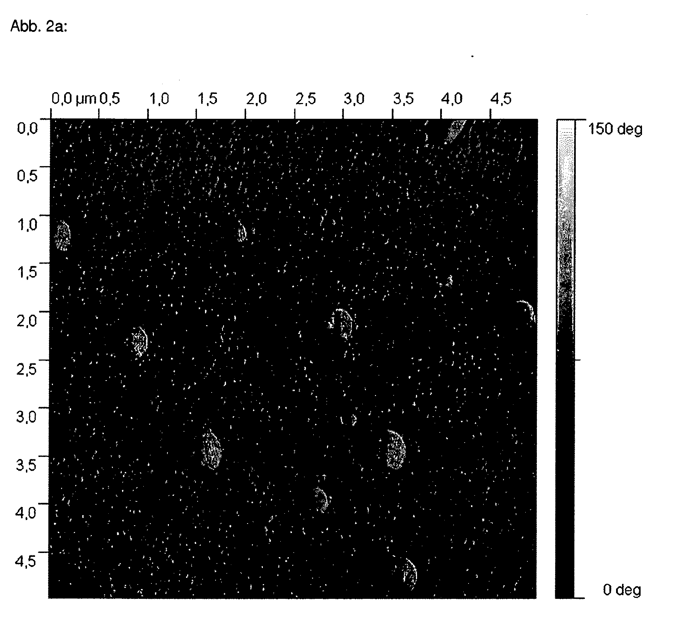

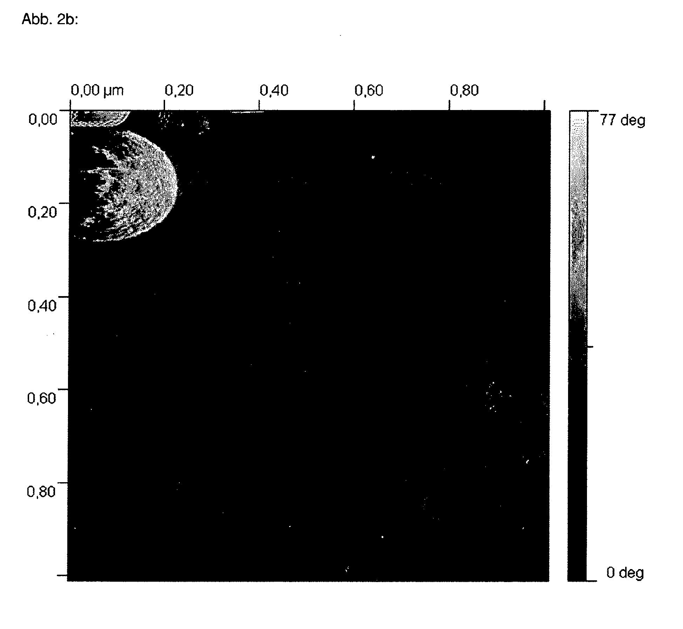

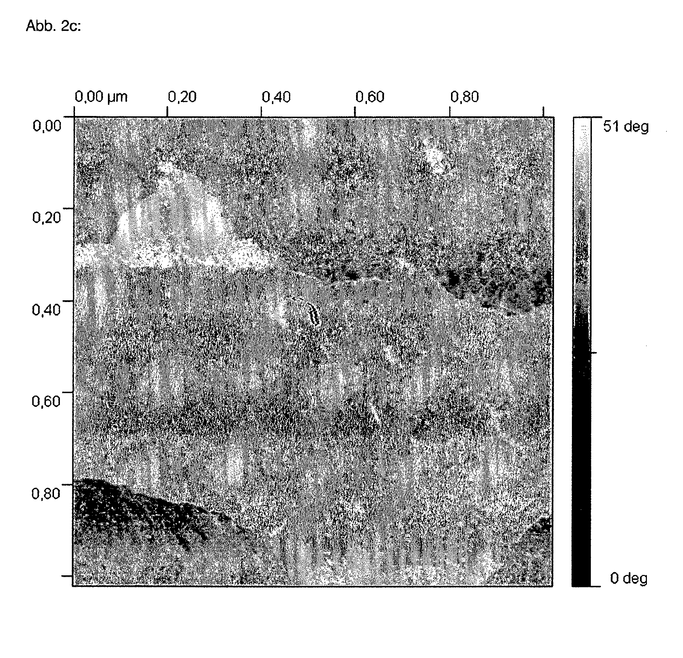

Nach Trocknung bei Raumtemperatur sind die einzelnen Latexpartikel sichtbar. Die PC18A-Partikel, die den Untergrund ausbilden, sind von den PFMA-Partikeln unterscheidbar, die sich oben auf der Oberfläche befinden (Abb. 2a). Diese Selbstorganisation der Partikel, die durch Diffusion der fluorierten Komponenten an die Grenzfläche zur Luft zustande kommt, ist bekannt. Sie dient dazu, dass das System seine Oberflächenenergie minimiert. Dies kann für das System Alkylacrylat/Fluoralkylacrylat erfolgen, indem sich die fluorierte Komponente an der Grenzfläche zur Luft anordnet. Bei Temperaturen von 60°C verfilmt das PC18A vollständig, was in Abb. 2b deutlich erkennbar ist. Der verfilmte Untergrund aus PC18A weist keine Strukturierung auf; die nicht geschmolzenen PFMA-Partikel befinden sich auf der Oberfläche, da deren Schmelzbereich erst bei ca. 91 °C liegt. Wird die Probe bei 100 °C getempert, verfilmt der Latexblend zu einem Polymerblend (Abb. 2c). Erkennbar ist, dass die PFMA-Partikel einen höheren Schmelzpunkt haben und langsam in die PC18A-Oberfläche fließen. Es bilden sich Domänen aus, deren Ausdehnung durch die Partikelgröße vorgegeben ist. Abb. 2c zeigt das Phasenbild bei 1 µm Auflösung. Die glatte Oberfläche weist zwei Domänen auf.

### Beschichtung von Textilien

Zur Beschichtung verschiedener Textilien werden diese direkt in die Emulsion getaucht (Dipcoating), kurz gerührt und auf eine gerade Fläche gebracht. Anschließend werden die Textilien bei 100°C für mindestens eine Stunde getrocknet. Die Temperatur von 100°C liegt über der minimalen Filmbildungstemperatur (MFT) bzw. der Schmelztemperatur von PFMA. Bei Raumtemperatur getrocknete Polymerdispersionen weisen keine wasserabweisende Eigenschaft auf, ein Wassertropfen dringt bei solchermaßen beschichteten Textilien schon nach kurzer Zeit in das Gewebe ein.

### Bestimmung der Rollwinkel von Polymerschichten auf Textilien

Die Abrollwinkel für die Polymerschichten auf Textilien werden mit einem Messgerät ermittelt, das eine von 0 ° bis 90 ° feinjustierbar kippbare Auflagefläche besitzt, auf die Textilproben aufgelegt werden. Nach Aufbringen eines Wassertropfens mit 0,1 ml Volumen wird die Auflagefläche mithilfe einer feinjustierbaren Vorrichtung langsam gekippt, bis der Tropfen zu rollen anfängt.

Zur Bestimmung der Rollwinkel von beschichteten Textilien wurde Textilgewebe aus grobmaschiger Baumwolle (BW grob), feinmaschiger Baumwolle (BW fein) und Nylon 6 mit Polymerblends aus den Homopolymeren PC18A und PFMA sowie aus PC18MA und PFMA mittels Dipcoating beschichtet. Anschließend wurden die beschichteten Gewebe für mindestens eine Stunde bei 100°C getrocknet. Als Vergleich wurden Gewebeproben mit den in Chloroform gelösten Homopolymeren PC18A, PC18MA und PFMA beschichtet. Die Rollwinkel für Wasser wurden bei einem Topfenvolumen von 0,1 ml gemessen. Die Ergebnisse sind in Tabelle 7 und Tabelle 8 dargestellt.

Zur Minimierung des Rollwinkels ist die fluorierte Komponente unerlässlich. Ein Blend aus PC18MA und PC18A in einem Mischverhältnis von 50/50 mol% weist Abrollwinkel von über 20° auf.

**Tab. 7: Rollwinkel der Homopolymere PC18A und PFMA sowie der Polymerblends daraus auf verschiedenen Textilgeweben**

| **Polymer** | **Mol% fluoriert** | **BW grob** | **BW fein** | **Nylon 6** |
|---|---|---|---|---|
| | | Rollwinkel θ (Durchschnitt aus je 6 Messungen) | | |
| C18A | 0 | 16° | 23° | 16° |
| C18A / FMA | 10 | 19° | 11° | 11° |
| C18A / FMA | 20 | 14° | 12° | 12° |
| C18A / FMA | 30 | 14° | 11° | 7° |
| C18A / FMA | 40 | 7° | 10° | 10° |
| C18A / FMA | 50 | 24° | 30° | 20° |
| C18A / FMA | 60 | 8° | 15° | 12° |
| FMA | 100 | 14° | 12° | 13° |

**Tab. 8: Rollwinkel der Homopolymere PC18MA und PFMA sowie der Polymerblends daraus auf verschiedenen Textilgeweben**

| **Polymer** | **Mol% fluoriert** | **BW grob** | **BW fein** | **Nylon 6** |
|---|---|---|---|---|
| | | Rollwinkel θ (Durchschnitt aus je 6 Messungen) | | |
| C18MA | 0 | 35° | 35° | 41° |
| C18MA / FMA | 10 | 10° | 27° | 18° |
| C18MA / FMA | 20 | 8° | 17° | 12° |
| C18MA / FMA | 30 | 11° | 26° | 12° |
| C18MA / FMA | 40 | 28° | 22° | 7° |
| C18MA / FMA | 50 | 12° | 20° | 21° |
| C18MA / FMA | 60 | 10° | 20° | 21° |
| FMA | 100 | 14° | 12° | 13° |

### Bestimmung der Kontaktwinkel von Polymerschichten auf Textilien

Die Kontaktwinkel werden mit einem Contact Angle Measuring System gemessen. Die Aufnahmen werden an einem separaten Bildschirm mit einem CCD Video Camera Module aufgenommen und mit Hilfe der Software Drop Shape Analysis 1.0 ausgewertet. Die Wassertropfen werden mit einer Mikroliterspritze auf die beschichteten Oberflächen aufgetragen. Wie für die Bestimmung der Rollwinkel wurden Textilien aus grobmaschiger Baumwolle (BW grob), feinmaschiger Baumwolle (BW fein) und Nylon 6 mit Polymerblends aus den Homopolymeren PC18A und PFMA sowie aus PC18MA und PFMA mittels Dipcoating beschichtet und für mindestens eine Stunde bei 100°C getrocknet. Als Vergleich wurden entsprechende Gewebeproben mit den in Chloroform gelösten Homopolymeren PC18A, PC18MA und PFMA beschichtet. Die Kontaktwinkel gegenüber Wasser wurden als Durchschnitt aus jeweils 3 Messungen mit Tropfenvolumen zwischen 11 und 16 µl bestimmt. Die Ergebnisse sind in Tabelle 9 und 10 dargestellt.

**Tab. 9: Kontaktwinkel der Homopolymere PC18A und PFMA sowie der Polymerblends daraus auf verschiedenen Textilgeweben**

| **Polymer** | **Mol% fluoriert** | **BW grob** | **BW fein** | **Nylon 6** |
|---|---|---|---|---|
| | | Kontaktwinkel θ (Durchschnitt aus je 3 Messungen) | | |
| C18A | 0 | 157° | 145° | 132° |
| C18A / FMA | 10 | 152° | 153° | 148° |
| C18A / FMA | 20 | 154° | 155° | 147° |
| C18A / FMA | 30 | 163° | 156° | 149° |
| C18A / FMA | 40 | 159° | 154° | 149° |
| C18A / FMA | 50 | 149° | 148° | 137° |
| C18A / FMA | 60 | 153° | 157° | 133° |
| FMA | 100 | 139° | 131° | 129° |

**Tab. 10: Kontaktwinkel der Homopolymere PC18MA und PFMA sowie der Polymerblends daraus auf verschiedenen Textilgeweben**

| **Polymer** | **Mol% fluoriert** | **BW grob** | **BW fein** | **Nylon 6** |
|---|---|---|---|---|
| | | Kontaktwinkel θ (Durchschnitt aus je 3 Messungen) | | |
| C18MA | 0 | 145° | 115° | 116° |
| C18MA / FMA | 10 | 158° | 139° | 148° |
| C18MA / FMA | 20 | 145° | 151° | 154° |
| C18MA / FMA | 30 | 166° | 143° | 143° |
| C18MA / FMA | 40 | 138° | 159° | 145° |
| C18MA / FMA | 50 | 142° | 137° | 128° |
| C18MA / FMA | 60 | 117° | 130° | 135° |
| FMA | 100 | 139° | 131° | 129° |

Die Polymerblends mit 70-80 mol% PC18MA zu 30-20 mol% PFMA zeigen die höchsten Kontaktwinkel. Diese liegen im Bereich von hydrophob zu superhydrophob. Bei einem höheren fluorierten Anteil sinken die Kontaktwinkel stark ab.

Für die Polymerblends bestehend aus PC18A/PFMA wird derselbe Trend der Kontaktwinkel beobachtet. Bei Mischungsverhältnissen von 60-90% PC18A und 10-40 mol% PFMA liegen die Kontaktwinkel im Bereich von hydrophob zu superhydrophob. Auch hier weisen Blends mit einem geringen Anteile an fluorierter Komponente höhere Kontaktwinkel als solche mit hohem Anteil an fluorierter Komponente auf.

Die fluorierte Komponente im Blend ist für die Erhöhung der Kontaktwinkel erforderlich. Ein Blend aus PC18MA/PC18A in einem Mischverhältnis von 50/50 mol% weist Kontaktwinkel kleiner als 135° auf.

### Weitere Analyse der Polymerschichten

Nach der Beschichtung mittels Dipcoating und Trocknen der Polymerblends sind die beschichteten Gewebe vollständig von Polymer überzogen. Die Analyse von Polymerschichten auf Gewebeproben mit Hilfe von Rasterelektronenmikroskop-Aufnahmen zeigt weiterhin, dass die Fasern von einem Polymerfilm umhüllt sind.

Zur Untersuchung der Homogenität der Beschichtungen wurden die Gewebe mit IR-Spektroskopie vermessen. Jeweils zwei Gewebestücke bestehend aus grob gewebter Baumwolle, fein gewebter Baumwolle und Nylon 6 wurden in die Emulsion von PC18MA getaucht, kurz gerührt und auf eine gerade Fläche gebracht. Anschließend wurden die Proben für mindestens eine Stunde bei 100°C getrocknet. Jedes Gewebestück wurde an fünf verschiedenen Punkten gemessen. Die erhaltenen IR-Spektren wurden verglichen, um zu prüfen, ob das Gewebe an diesen Stellen mit Polymer überzogen war. Durch die spektroskopische Untersuchung der unterschiedlichen Oberflächen konnte gezeigt werden, dass sich die Emulsion bei der Filmbildung gleichmäßig auf dem Gewebe verteilt. Der Vergleich der IR-Spektren von PC18MA, Nylon 6-Gewebe und dem beschichteten Gewebe zeigt außerdem, dass Letzteres eine Überlagerung der Spektren von PC18MA Polymer und unbeschichtetem Nylon 6-Gewebe ist. Somit waren die mit Emulsionen beschichteten Gewebe vollständig mit Polymer überzogen.

### Analyse der schmutzabweisenden Eigenschaft

Zum Test der schmutzabweisenden Eigenschaft der Polymerblends wurde Nylon 6 Gewebe mit PC18MA/PFMA in einem Verhältnis von 70/30 mol% und PC18A/PFMA in einem Mischverhältnis von 70/30 mol% beschichtet. Die mit den Polymerblends beschichteten Gewebe wurden mit handelsüblichem Ketchup getränkt oder der Ketchup wurde ins beschichtete Textilgewebe gerieben. In beiden Fällen ist die Entfernung des Ketchups mit kaltem Wasser restlos möglich.

### Analyse der ölabweisenden Eigenschaft

Für die Analyse der ölabweisenden Eigenschaften wurde Nylon 6 Gewebe mit PC18MA/PFMA in einem Mischungsverhältnis von 70/30 mol% und PC18A/PFMA in einem Mischverhältnis von 70/30 mol% beschichtet. Das beschichtete Gewebe wurde dazu mit verschiedenen Öl-Sorten betropft. Getestet wurde Sonnenblumenöl, Rapsöl und Heizöl. Anschließend wurde das Öl mit heißem Wasser abgewaschen.

Sonnenblumenöl perlt von den Oberflächen ab und kann abgewaschen werden. Nach der Trocknung sind kaum Rückstände erkennbar. Die Viskosität von Rapsöl ist höher als die von Sonnenblumenöl. Rapsöl perlt größtenteils ab; nach der Trocknung sind Ölrückstände im Gewebe sichtbar. Heizöl hat die geringste Viskosität der drei Öle, es tropft vom beschichteten Gewebe ab und lässt sich abwaschen. Jedoch ist schon im nassen Zustand des Gewebes sichtbar, dass Rückstände zurück blieben. Nach der Trocknung sind braune Flecken erkennbar.

Die oleophobe Eigenschaft der Polymerblends auf Textilgeweben ist etwas geringer ausgeprägt als die hydrophobe Eigenschaft, was auf den geringen Anteil an PFMA im Polymerblend zurückzuführen ist.

### Analyse der Beständigkeit der Polymerschichten gegenüber Waschen

20x2 cm große, aus feinmaschiger Baumwolle bestehende Textilstücke wurden mit Blends aus PC18MA/PFMA im Mischungsverhältnis von 80/20 mol% sowie PC18A/PFMA in einem Mischungsverhältnis von 80/20 mol% beschichtet und bei 100°C für mindestens eine Stunde getrocknet. Anschließend wurden die Textilproben für eine Stunde bei 60°C und 750 U/Min. gewaschen. Der Waschvorgang wurde zehnmal wiederholt. Die gemessenen Werte der Roll- und Kontaktwinkel sind in Tab. 11 zusammengefasst. Die minimale Erhöhung des Kontaktwinkels um ca. 10° nach dem Waschvorgang lässt sich durch das Aufrauen des Gewebes infolge der mechanischen Behandlung beim Waschen erklären.

**Tab. 11: Roll- und Kontaktwinkel der Polymerblends nach zehnmaligem Waschen bei 60 °C**

| | PC18MA / PFMA | PC18A / PFMA |
|---|---|---|
| Rollwinkel θ (Durchschnitt aus je 6 Messungen) | 42° | 13° |
| Kontaktwinkel θ (Durchschnitt aus je 3 Messungen) | 147° | 156° |

### Austausch der fluorierten Komponente gegen Polydimethylsiloxan

Die hergestellten Emulsionen aus PC18MA und PC18A werden anstatt mit PFMA mit einer Polydimethylsiloxan-Emulsion (PDMS; Wacker^{®}, Partikelgröße max. 250 nm) geblendet. PDMS ist mit PC18MA und PC18A in allen Verhältnissen mischbar. Die Blends haben stark wasserabweisende Eigenschaften. Es können Abroll- und Kontaktwinkel vergleichbar zu denen der PFMA-Blends gemessen werden.

**Tab. 12: Roll- und Kontaktwinkel der Polymerblends aus Polydimethylsiloxan und PC18A**

| | **mol% PDMS** | **Kontaktwinkel θ** | **Rollwinkel θ** |
|---|---|---|---|
| C18A | 0 | 157° | 16° |
| C18A / PDMS | 10 | 146° | 16° |
| C18A / PDMS | 20 | 145° | 11° |
| C18A / PDMS | 30 | 134° | 12° |
| C18A / PDMS | 40 | 144° | 18° |
| C18A / PDMS | 50 | 149° | 13° |
| C18A / PDMS | 60 | 154° | 10° |
| C18A / PDMS | 70 | 149° | 7° |
| C18A / PDMS | 80 | 156° | 11° |
| C18A/PDMS | 90 | 144° | 13° |

**Tab. 13: Roll- und Kontaktwinkel der Polymerblends aus Polydimethylsiloxan und PC18MA**

| | **mol% PDMS** | **Kontaktwinkel θ** | **Rollwinkel θ** |
|---|---|---|---|
| C18MA | 0 | 145° | 35° |
| C18MA / PDMS | 10 | 122° | 33° |
| C18MA / PDMS | 20 | 124° | 28° |
| C18MA / PDMS | 30 | 126° | 32° |
| C18MA / PDMS | 40 | 127° | 28° |
| C18MA / PDMS | 50 | 134° | 28° |
| C18MA / PDMS | 60 | 133° | 28° |
| C18MA / PDMS | 70 | 137° | 28° |
| C18MA / PDMS | 80 | 134° | 27° |
| C18MA / PDMS | 90 | 135° | 23° |

Grobmaschiges Baumwollgewebe wurde in Polymerdispersionen der Latex-Blends getaucht und bei 100°C für mindestens eine Stunde getempert. Nach dem Trocknen wurden die Roll- und Kontaktwinkel der Polymerschichten gemessen. Für das reine PDMS kann kein Roll- und Kontaktwinkel gemessen werden, da Wassertropfen sofort ins Gewebe eindringen. In Tab. 12 und 13 sind die Roll- und Kontaktwinkel für Blends aus PC18MA und PDMS sowie aus PC18A und PDMS dargestellt. Besonders gute Ergebnisse liefern die PC18A/PDMS Blends. Bei hohen Anteilen an PDMS (60-80 mol%) im Blend ergeben sich Kontaktwinkel von bis zu 156°. Die Hydrophobie der Polymerschicht ist damit sehr ausgeprägt.

Auch bei den Rollwinkeln liefern die Blends aus PC18A und PDMS die besseren Ergebnisse. Die gemessenen Winkel liegen für alle Mischungsverhältnisse unter 20°. Besonders niedrige Rollwinkel von nur 7° treten bei PC18A/PDMS (30/70 mol%) auf.

Der Polymerblend PC18A/PDMS mit einem Mischungsverhältnis von 70/30 mol% wurde für 30 Minuten bei 60 °C unter kontinuierlichem Rühren gewaschen. Nach dem Trocknen perlt der Wassertropfen ab, was zeigt, dass auch die hydrophoben Eigenschaften von Blends mit Polydimethylsiloxan beständig gegenüber Waschen sind.
**Abb. 1****:**
   Röntgenpulverdiffraktogramm der Homopolymere PC18A, PC18MA und PFMA
**Abb. 2a****:**
   Phasenbild der AFM-Aufnahmen des Polymerblends aus PC18A und PFMA im Mischungsverhältnis 80/20 Mol% getrocknet bei Raumtemperatur.
**Abb. 2b****:**
   Phasenbild der AFM-Aufnahmen des Polymerblends aus PC18A und PFMA im Mischungsverhältnis 80/20 Mol% getrocknet bei 60°C.
**Abb. 2c****:**
   Phasenbild der AFM-Aufnahmen des Polymerblends aus PC18A und PFMA im Mischungsverhältnis 80/20 Mol% getrocknet bei 100°C.

## Patentansprüche

1. Polymerblend in wässriger Dispersion (Latex-Blend) umfassend
a) wenigstens ein nichtfluoriertes Homo- oder Copolymer (I), nachfolgend Polymer (I) genannt, erhalten durch Polymerisation von Monomeren ausgewählt aus der Gruppe Alkylacrylat, Alkylmethacrylat, Styrol, Styrol-Derivat, Vinylchlorid, Vinylalkylether, Vinylacetat und Dimethylsiloxan, und
b) wenigstens ein Homo- oder Copolymer (II), nachfolgend Polymer (II) genannt, umfassend eine polyfluorierte Komponente oder ein Polydiorganosiloxan,
**dadurch gekennzeichnet, dass**
▪ der Anteil der polyfluorierten Komponente oder des Polydiorganosiloxans als Polymer (II) im Latex-Blend für eine polyfluorierte Komponente 2 bis 40 Mol% und für ein Polydiorganosiloxan 30 bis 90 Mol% bezogen auf die Monomereinheiten beträgt,
▪ der Rollwinkel des verfilmten Latex-Blends für Wasser kleiner oder gleich 30° ist
▪ und/oder der Kontaktwinkel des verfilmten Polymerblends gegenüber Wasser größer oder gleich 140° ist.

2. Polymerblend nach Anspruch 1, **dadurch gekennzeichnet, dass** der Anteil der polyfluorierten Komponente im Polymerblend 10 bis 30 Mol%, bevorzugt 15 bis 30 Mol%, besonders bevorzugt 20 bis 30 Mol% bezogen auf die Monomereinheiten beträgt oder der Anteil des Polydiorganosiloxans als Polymer (II) im Polymerblend 40 bis 85 Mol%, bevorzugt 50 bis 80 Mol%, besonders bevorzugt 60 bis 80 Mol% bezogen auf die Monomereinheiten beträgt.

3. Polymerblend nach Anspruch 1 oder 2, **dadurch gekennzeichnet, dass** der Rollwinkel des verfilmten Latex-Blends für Wasser kleiner oder gleich 20°, bevorzugt kleiner oder gleich 15° ist und/oder der Kontaktwinkel des verfilmten Latex-Blends gegenüber Wasser größer oder gleich 150°, bevorzugt größer oder gleich 160° ist.

4. Polymerblend nach einem der vorhergehenden Ansprüche, **dadurch gekennzeichnet, dass** das Alkylacrylat oder Alkylmethacrylat im Polymer (I) eine C-Kettenlänge des Alkylrests zwischen C₁₀ und C₂₄, bevorzugt zwischen C₁₆ und C₂₀, besonders bevorzugt von C₁₈ aufweist und linear oder verzweigt ist.

5. Polymerblend nach einem der vorhergehenden Ansprüche, **dadurch gekennzeichnet, dass** die fluorierte Komponente im Polymer (II) ein Alkylacrylat oder ein Alkylmethacrylat ist.

6. Polymerblend nach Anspruch 5, **dadurch gekennzeichnet, dass** das Alkylacrylat oder Alkylmethacrylat im Polymer (II) eine C-Kettenlänge des Alkylrests zwischen C₈ und C₂₀, bevorzugt zwischen C₈ und C₁₂, besonders bevorzugt von C₁₀ aufweist und linear oder verzweigt ist.

7. Polymerblend nach einem der Ansprüche 1 bis 4, **dadurch gekennzeichnet, dass** das Polymer (II) Dimethylsiloxan ist.

8. Polymerblend nach einem der vorhergehenden Ansprüche, **dadurch gekennzeichnet, dass** die Ketten der Polymere (I) und (II) nicht chemisch untereinander vernetzt sind.

9. Verfahren zur Herstellung eines Polymerblends in wässriger Dispersion (Latex-Blend) nach einem der Ansprüche 1 bis 8, **dadurch gekennzeichnet, dass** das wenigstens eine Homo- oder Copolymer (I) und das wenigstens eine Homo- oder Copolymer (II) als wässrige Dispersionen gemischt werden.

10. Verwendung der Polymerblends nach einem der Ansprüche 1 bis 8 zur Herstellung einer wasserbeständigen hydrophoben und/oder oleophoben Polymerschicht auf einer Trägersubstanz mit einem Rollwinkel für Wasser kleiner oder gleich 30° und/oder einem Kontaktwinkel gegenüber Wasser größer oder gleich 140°.

11. Polymerschicht erhalten durch Beschichten einer Trägersubstanz mit einem Polymerblend nach einem der Ansprüche 1 bis 8, **dadurch gekennzeichnet, dass** der Polymerblend nach dem Auftragen auf die Trägersubstanz durch Tempern für mindestens 30 Minuten bei einer Temperatur oberhalb der Schmelztemperatur desjenigen Polymers (I) oder (II) im Blend verfilmt wird, das die höchste Schmelztemperatur besitzt.

12. Polymerschicht nach Anspruch 11, **dadurch gekennzeichnet, dass** die Trägersubstanz ein Textilgewebe, ein Vlies, Papier, Keramik, Kunststoff, Metall oder Glas ist.

13. Polymerschicht nach einem der Ansprüche 11 bis 12, **dadurch gekennzeichnet, dass** sie eine chemisch heterogene Struktur mit getrennten Bereichen aus Polymer (I) und Polymer (II) aufweist, die Ausdehnungen und/oder Höhenunterschiede im Mikrometerbereich haben.

14. Verfahren zur Herstellung einer Polymerschicht nach einem der Ansprüche 11 bis 13, **dadurch gekennzeichnet, dass** der Polymerblend nach dem Auftragen auf die Trägersubstanz durch Tempern für mindestens 30 Minuten, bevorzugt für mindestens 60 Minuten, besonders bevorzugt für mindestens 90 Minuten, ganz besonders bevorzugt für mindestens 120 Minuten und am meisten bevorzugt für 180 Minuten bei einer Temperatur oberhalb der Schmelztemperatur desjenigen Polymers (I) oder (II) im Blend verfilmt wird, das die höchste Schmelztemperatur besitzt.

15. Verwendung der Polymerschicht nach einem der Ansprüche 11 bis 13 als wasserbeständige hydrophobe und/oder oleophobe Beschichtung von Trägersubstanzen mit strukturierten Oberflächen, insbesondere von Textilien, Vliesen, Papieren, Keramik, Kunststoffen, Metall oder Glas.

## Claims

1. Polymer blend in aqueous dispersion (Latex - blend) comprising
a) at least one non-fluorinated homopolymer of copolymer (I), hereinafter referred to as polymer (I) obtained by polymerisation of monomers that are selected from the group of alkyl acrylates, alkyl methacrylates, styrene, styrene derivatives, vinyl chloride, vinyl alkyl ether, vinyl acetate and dimethyl siloxane and
b) at least one homopolymer of copolymer (II), hereinafter referred to as polymer (II) comprising a polyfluorinated component or a polymeric diorganosiloxane,
is **characterized by** the fact that
• the fraction of the polyfluorinated component or the polymeric diorganosiloxane as polymer (II) in the latex - blend measures 2 to 40 % by mole in case of the polyfluorinated component, while that for polymeric diorganosiloxane measures 30 to 90% by mole, both these figures being based on monomer units.
• The angle of roll of the film of the latex - blend for water is less than or equal to 30°
• and / or the angle of contact of the film of the polymer blend with the surface of water is greater than or equal to 140°.

2. The polymer blend described in claim 1 is **characterized by** the fact that the fraction of the polyfluorinated component in the polymer blend is 10 to 30% by mole, but is preferred to be 15 to 30% by mole, and 20 to 30% by mole is particularly preferred, all values being based on monomer units or the fraction of the polymeric diorganosiloxane used as the polymer (II) in the polymer blend is 50 to 80% by mole, but is particularly preferred to be 60 to 80% by mole, based on monomer units.

3. The polymer blend described in claim 1 or 2 is **characterized by** the fact that the angle of roll of the film of the latex - blend for water is less than or equal to 20°, the preferred value being less than or equal to 15° and / or the angle of contact of the film of the latex - blend with the surface of water is greater than or equal to 150°, the preferred value being greater than or equal to 160°.

4. The polymer blend described in one of the earlier claims is **characterized by** the fact that the alkyl group of the alkyl acrylate or the alkyl methacrylate in the polymer (I) has a linear or a branched chain of carbon atoms with chain length between C₁₀ and C₂₄, the preferred length being between C₁₆ and C₂₀, while the length particularly preferred is C₁₈.

5. The polymer blend described in one of the earlier claims is **characterized by** the fact that the fluorinated component in the polymer (II) is an alkyl acrylate or an alkyl methacrylate.

6. The polymer blend described in claim 5 is **characterized by** the fact that the alkyl acrylate or the alkyl methacrylate in the polymer (II) has a linear or a branched chain of carbon atoms with chain length between C₈ and C₂₀, the preferred length being between C₈ and C₁₂, while the length particularly preferred is C₁₀.

7. The polymer blend described in one of the claims from 1 to 4 is **characterized by** the fact that the polymer (II) is dimethyl siloxane.

8. The polymer blend described in one of the earlier claims is **characterized by** the fact that the chains of the polymers (I) and (II) are chemically not cross-linked to each other.

9. According to one of the claims from 1 to 8 the process of manufacture of a polymer blend in an aqueous dispersion (Latex - blend) is **characterized by** the fact that at least one homopolymer or copolymer (I) is mixed and at least one homopolymer or copolymer (II) are mixed as aqueous dispersions.

10. The application of the polymer blends described in one of the claims from 1 to 8 for production of water resistant hydrophobic and / or oleophobic polymer layer on a carrier substance with an angle of roll for water less than or equal to 30° and / or the angle of contact with the surface of water greater than or equal to 140°.

11. The polymer layer created by coating a carrier substance with a polymer blend described in one of the claims from 1 to 8 is **characterized by** the fact that after applying the polymer blend on the carrier substance a film is generated by tempering for at least 30 minutes at a temperature that is higher than the melting temperature of polymer (I) or the melting temperature of polymer (II) in the blend, whichever is higher.

12. The polymer layer described in claim 11 is **characterized by** the fact that the carrier substance is a textile fabric, a non-woven fabric, paper, ceramic, plastic, metal or glass.

13. The polymer layer described in one of the claims from 11 to 12 is **characterized by** the fact that it has a chemically heterogeneous structure with the regions comprising polymer (I) and Polymer (II) being distinct from one another and the elongations and / or differences in the heights being in micrometers.

14. According to one of the claims from 11 to 13 the process of producing a polymer layer is **characterized by** the fact that after applying the polymer blend on the carrier substance a film is generated by tempering for at least 30 minutes, but preferred for at least 60 minutes, particularly preferred for at least 90 minutes and the most preferred being at least 180 minutes and this is performed at a temperature that is higher than the melting temperature of polymer (I) or the melting temperature of polymer (II) in the blend, whichever is higher.

15. The application of the polymer layer described in one of the claims from 11 to 13 as a water resistant hydrophobic and / or oleophobic coating on carrier substances having structured surfaces, particularly of textile fabrics, non-woven fabrics, paper, ceramics, plastics, metals or glass.

## Revendications

1. Mélange polymère en dispersion aqueuse (mélange latex) comprenant
a) au moins un homopolymère ou un copolymère (I) non fluoré, désigné ci-après polymère (I), obtenu par polymérisation de monomères choisis dans le groupe de l'acrylate d'alkyle, du méthacrylate d'alkyle, du styrolène, de dérivé de styrolène, du chlorure de vinyle, de l'éther vinylique d'alkyle, de l'acétate de vinyle et du diméthylsiloxane,
b) au moins un homopolymère ou un copolymère (II), désigné ci-après polymère (II) englobant une composante polyfluorée ou un polydiorganosiloxane,
**caractérisé par le fait, que**
• la part de la composante polyfluorée ou du polydiorganosiloxane comme polymère (II) dans le mélange latex est de l'ordre de 2 à 40 mol% pour une composante polyfluorée et 30 à 90 mol% pour un polydiorganosiloxane par rapport aux unités monomères.
• l'angle d'attaque (de roulis) du mélange latex filmé pour l'eau est inférieur ou égal à 30°
• et/ou l'angle de contact eau du mélange polymère filmé est supérieur ou égal 140°.

2. Mélange polymère selon exigence 1, **caractérisé par le fait, que** la part de composante polyfluorée dans le mélange polymère est de l'ordre de 10 à 30 mol%, de préférence 15 à 30 mol%, de plus grande préférence encore 20 à 30 mol% par rapport aux unités monomères ou la part du polydiorganosiloxane en tant que polymère (II) dans le mélange polymère est de l'ordre de 40 à 85 mol%, de préférence 50 à 80 mol%, de plus grande préférence encore 60 à 80 mol% par rapport aux unités monomères.

3. Mélange polymère selon exigence 1 ou 2, **caractérisé par le fait, que** l'angle d'attaque du mélange latex filmé pour l'eau est inférieur ou égal à 20°, de préférence inférieur ou égal à 15° et/ou l'angle de contact eau du mélange latex filmé est supérieur ou égal à 150°, de préférence supérieur ou égal à 160°.

4. Mélange polymère d'après une des exigences ci-dessus, **caractérisé par le fait, que** l'acrylate d'alkyle ou le méthacrylate d'alkyle dans le polymère (I) présente une longueur de chaîne C du reste de l'alkyde entre C₁₀ et C₂₄, de préférence C₁₆ et C₂₀, de plus grande préférence encore C₁₈ et soit linéaire ou ramifiée.

5. Mélange polymère selon une des exigences ci-dessus, **caractérisé par le fait, que** la composante fluorée dans le polymère (II) est un acrylate d'alkyle ou un méthacrylate d'alkyle.

6. Mélange polymère selon exigence 5, **caractérisé par le fait, que** l'acrylate d'alkyle ou le méthacrylate d'alkyle dans le polymère (II) présente longueur de chaîne C du reste de l'alkyde entre C₈ et C₂₀, de préférence C₈ et C₁₂, de plus grande préférence encore C₁₀ et soit linéaire ou ramifiée.

7. Mélange polymère selon une des exigences 1 à 4, **caractérisé par le fait, que** le polymère (II) est diméthylsiloxane.

8. Mélange polymère selon une des exigences ci-dessus, **caractérisé par le fait, que** les chaînes des polymères (I) et (II) ne sont chimiquement pas réticulées entre elles.

9. Procédé pour la fabrication d'un mélange polymère en dispersion aqueuse (mélange latex) selon une des exigences 1 à 8, **caractérisé par le fait, qu'**au moins un homopolymère ou copolymère (I) et au moins homopolymère ou copolymère (II) viennent à être mélangés en dispersion aqueuse.

10. Utilisation des mélanges de polymères selon une des exigences 1 à 8 pour la réalisation d'une couche polymère hydrorésistante hydrophobe et/ou oléophobe sur une substance support avec un angle d'attaque pour l'eau inférieur ou égal à 30° et/ou un angle d'eau supérieur ou égal à 140°.

11. La couche polymère obtient par couchage sur une substance support avec un mélange polymère selon une des exigences 1 à 8, **caractérisé par le fait, que** le mélange polymère, après l'application sur la substance support suite à malléabilisation pour au moins 30 minutes à une température supérieure à la température de fusion dupolymère respectif (I) ou (II) disposant de la température de fusion la plus élevée, se trouve filmé dans le mélange.

12. Couche polymère selon exigence 11, **caractérisé par le fait, que** la substance support est un tissu textile, un voile carde, du papier, de la céramique, du plastique, du métal ou du verre.

13. Couche polymère selon exigences 11 à 12, **caractérisé par le fait, que** celle-ci a une structure chimique hétérogène avec des niveaux séparés de polymère (I) et polymère (II), disposant de dilatations et/ou de différences de hauteurs de l'ordre du micromètre.

14. Procédé pour la fabrication d'une couche polymère selon une des exigences 11 à 13, **caractérisé par le fait, que** le mélange polymère après l'application sur la substance support par malléabilisation pour au moins 30 minutes, de préférence pour au moins 60 minutes, plus particulièrement de préférence encore 90 minutes, et tout particulièrement de préférence 120 minutes, et le plus préféré pour 180 minutes à une température supérieure à la température de fusion du polymère respectif (I) ou (II) disposant de la température de fusion la plus élevée, se trouve filmé dans le mélange.

15. Utilisation de la couche polymère selon une des exigences 11 à 13, comme couchage hydrorésistant hydrophobe et/ou oléophobe de substances supports avec état de surface structuré, plus particulièrement de textiles, voiles de carde, papiers, céramiques, plastiques, métal ou verre.
